(19) Europäisches Patentamt
European Patent Office
Office européen des brevets

(11) **EP 4 651 397 A1**

(12) **EUROPEAN PATENT APPLICATION**

(43) Date of publication:
**19.11.2025 Bulletin 2025/47**

(21) Application number: **25153871.6**

(22) Date of filing: **24.01.2025**

(51) International Patent Classification (IPC):
**H04B 7/06** (2006.01)

(52) Cooperative Patent Classification (CPC):
**H04B 7/0626; H04B 7/06952**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2024 CN 202410620139**

(71) Applicant: **Beijing X-Ring Technology Co., Ltd.
Beijing 100085 (CN)**

(72) Inventors:
- TAN, Shu
  **Beijing, 100085 (CN)**
- WEI, Gang
  **Beijing, 100085 (CN)**
- WANG, Bo
  **Beijing, 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD FOR BEAM SENSING, COMMUNICATION DEVICE, AND CHIP**

(57) The invention provides a method and an apparatus for beam sensing, which relates to a field of communication technology. The method includes: obtaining a first beam feature set and a second beam feature set related to a current network standard; and in response to at least one first parameter of the first beam feature set and at least one second parameter of the second beam feature set satisfying a preset condition, selecting the first beam feature set or the second beam feature set as an acquisition source of channel state information (CSI), in which the first beam feature set is related to the at least one first parameter, and the second beam feature set is related to the at least one second parameter. The invention may improve the accuracy of determining the acquisition source corresponding to the CSI, the reception state and the communication quality of the communication device.

Processed by Luminess, 75001 PARIS (FR)

**Description**

**TECHNICAL FIELD**

The invention relates to the field of communication technology, and more particularly, to a method and an apparatus for beam sensing, a communication device, a storage medium and a chip.

**BACKGROUND**

With the development of communication technology, beamforming, as key technology of a wireless communication system in medium and high frequency wideband, is widely used in a cellular mobile communication system including New Radio (NR, commonly known as 5G). The beamforming technology may be that, for example, parameters of basic units of a phase array are adjusted, so that signals at some angles undergo constructive interference while signals at other angles undergo destructive interference, thus generating a beam.

**SUMMARY**

The invention is set out in the appended set of claims.

The technical solution provided by the invention brings at least the following beneficial effects: a mechanism for beam sensing may be provided. The acquisition source corresponding to the CSI may be determined according to whether the at least one first parameter of the first beam feature set and the at least one second parameter of the second beam feature set satisfy the preset condition, which may improve the accuracy of determining the acquisition source corresponding to the CSI, and reduce the situation where determination of the CSI is inaccurate due to the fact that the CSI required for channel estimation does not match the acquisition source. As such, the accuracy of obtaining the CSI may be improved, the reception state of the communication device may be improved, and the communication quality of the communication device may be improved.

**BRIEF DESCRIPTION OF THE DRAWINGS**

FIG. 1 is a flowchart illustrating a beamforming method according to an embodiment.
FIG. 2 is an example diagram illustrating a beamforming application according to an embodiment.
FIG. 3 is an example diagram illustrating a beamforming application according to an embodiment.
FIG. 4 is an example diagram illustrating of a static wide beam for a time-frequency tracking reference signal (TRS) and a dynamic narrow beam for a physical downlink shared channel (PDSCH) according to an embodiment.
FIG. 5 is a flowchart illustrating a method for beam sensing according to an embodiment.
FIG. 6 is a flowchart illustrating a method for beam sensing according to an embodiment.
FIG. 7 is a flowchart illustrating a method for determining downlink (DL) beamforming support information according to an embodiment.
FIG. 8a is an example diagram illustrating a neural network model according to an embodiment.
FIG. 8b is an example diagram illustrating a neural network model according to an embodiment.
FIG. 8c is an example diagram illustrating a neural network model according to an embodiment.
FIG. 8d is an example diagram illustrating an implementation of a single decision tree according to an embodiment.
FIG. 9 is an example diagram illustrating first time information and second time information according to an embodiment.
FIG. 10 is an example diagram illustrating first time information and second time information according to an embodiment;
FIG. 11 is a block diagram illustrating an apparatus for beam sensing according to an embodiment.
FIG. 12 is a block diagram of a communication device according to an embodiment.
FIG. 13 is a block diagram of a chip according to an embodiment.

**DETAILED DESCRIPTION**

In order to enable those skilled in the art to better understand the technical solutions of the invention, the technical solutions in the embodiments of the invention will be clearly and completely described below in conjunction with the accompanying drawings.

The embodiments of the invention provide a method and an apparatus for beam sensing a communication device, a storage medium and a chip. In some embodiments, the terms such as the method for beam sensing, the method for information processing, the communication method, etc. may be replaced with each other, the terms such as the apparatus for beam sensing, the apparatus for information processing, the communication apparatus, etc. may be replaced with each other, and the terms such as a system for information processing, a communication system, etc. may be replaced with each other.

The embodiments of the invention are not exhaustive, but are only illustrative of some embodiments, and are not intended to be a specific limitation on the scope of protection of the invention. In the absence of contradiction, each step in a certain embodiment may be implemented as an independent embodiment, and various steps may be arbitrarily combined. For example, the solution after removing some steps in a certain embodiment may also be implemented as an independent embodiment, and the order of various steps in a certain embodiment may be arbitrarily exchanged. In addition, optional implementations in a certain embodiment may be arbitrarily combined. In addition, the embodiments may be arbitrarily combined, for example, some or all steps of different embodiments may be arbitrarily combined, and a certain embodiment may be arbitrarily combined with the optional implementations of other embodiments.

In various embodiments of the invention, unless otherwise specified or there is a logical conflict, the terms and/or descriptions between the embodiments are consistent and may be referenced to each other, and the technical features in different embodiments may be combined to form a new embodiment according to their internal logical relationships.

The terms used in the embodiments of the invention are only for the purpose of describing specific embodiments and are not intended to limit the invention.

In the embodiments of the invention, unless otherwise specified, the elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the invention, "a plurality of" refers to two or more than two.

In some embodiments, the terms "at least one of", "one or more of", "a plurality of", "a plurality of," etc. may be used interchangeably.

In some embodiments, the expressions "at least one of A or B", "A and/or B", "A in one case, B in another case", "in response to one case A, in response to another case B", etc., may include the following technical solutions according to the situations: in some embodiments, A (A is executed independently of B); in some embodiments, B (B is executed independently of A); in some embodiments, either A or B is selected for execution (either A or B is selectively executed); in some embodiments, A and B (both A and B are executed). When there are more options such as A, B, C, etc., the similar principle is applied as described above.

In some embodiments, the expression "A or B" may include the following technical solutions according to the situations: in some embodiments, A (A is executed independently of B); in some embodiments, B (B is executed independently of A); either A or B is selected for execution (either A or B is selectively executed). When there are more options such as A, B, C, etc., the similar principle is applied as described above.

The prefixes such as "first" and "second" in the embodiments of the invention are only used to distinguish different described objects, and do not constitute restrictions on the position, order, priority, quantity or content of the described objects. The statement of the described object refers to claims or the description in the context of the embodiments, and should not constitute redundant restrictions due to the use of prefixes. For example, if the described object is a "field", ordinal numbers before the "field" in the "first field" and the "second field" does not limit a position or order between the fields, which means that the "first" and "second" neither limit whether the "fields" they modify are in the same message, nor the order between the "first field" and the "second field". For another example, if the described object is a "level", ordinal numbers before the "level" in the "first level" and the "second level" does not limit priorities between the "levels". For another example, a number of described objects is not limited by the ordinal numbers, and there may be one or more described objects. Taking "first apparatus" as an example, a number of " apparatuses" may be one or more. In addition, the objects modified by different prefixes may be the same or different. For example, if the described object is "apparatus", the "first apparatus" may be the same as or different from the "second apparatus", which means that types of the first and second apparatuses may be the same or different. For another example, if the described object is "information", the "first information" may be the same as or different from the "second information", and contents of the first and second information may be the same or different.

In some embodiments, "including A", "containing A", "indicating A", and "carrying A" may be interpreted as directly carrying A or indirectly indicating A.

In some embodiments, terms such as "in response to ...", "in response to determining ...", "in the case of...", "at the time of...", "when ...", "in case that...", "if ...", etc. may be used interchangeably.

In some embodiments, terms such as "greater than", "greater than or equal to", "not smaller than", "more than", "more than or equal to", "not less than", "higher than", "higher than or equal to", "not lower than", and "above" may be replaced with each other, and terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and device may be interpreted as physical or virtual, and their names are not limited to the names described in the embodiments. In some cases, they may also be understood as "equipment", "device", "circuit", "network element", "node", "function", "unit", "section", "system", "network", "chip", "chip system", "entity", "subject", etc.

In some embodiments, "network" may be interpreted as apparatuses included in the network, such as an access network device, a core network device, etc.

In some embodiments, "terminal" or "terminal device" may be referred to as a user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, etc.

In some embodiments, data, information, etc. may be obtained with the consent of the user

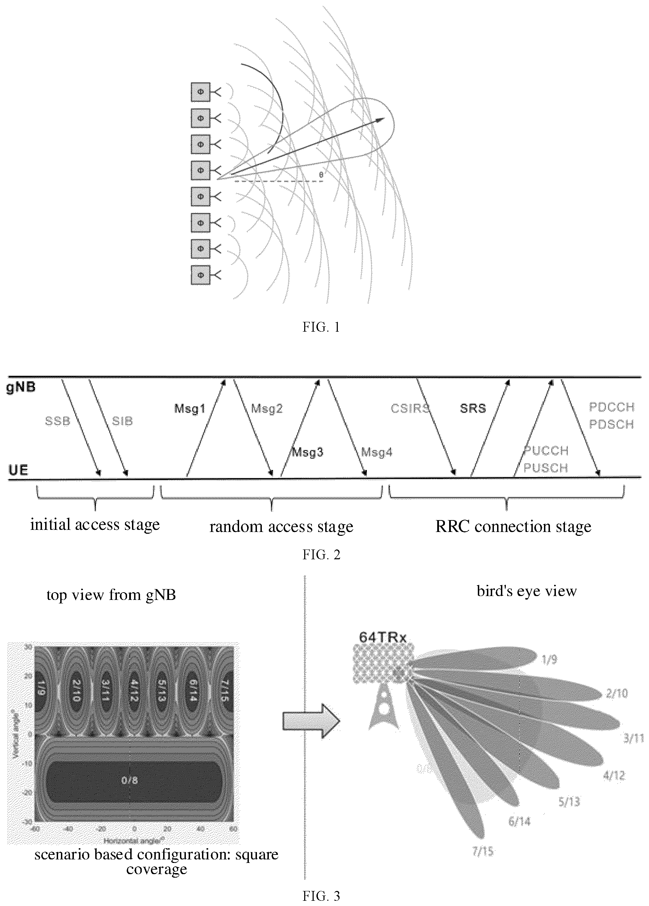

According to some embodiments, FIG. 1 is a flowchart illustrating a beamforming method according to an embodiment. As illustrated in FIG. 1, the beamforming technology is that signals at some angles undergo constructive interference while signals at other angles undergo destructive interference by adjusting parameters of basic units of a phase array, thus generating a beam.

According to some embodiments, FIG. 2 is an example diagram illustrating a beamforming application according to an embodiment. As illustrated in FIG. 2, taking an NR 5G downlink (DL) direction application as an example, when a next-generation node B (gNodeB, gNB) sends a synchronization signal and PBCH block (referred to as SSB) and a system information block (referred to as SIB), a static beam way is used to ensure a service quality of all UEs in a coverage area.

According to some embodiments, FIG. 3 is an example diagram illustrating a beamforming application according to an embodiment. As illustrated in FIG. 3, taking a typical static beam design in the Frequency Range 1 (FR1 for short, commonly known as Sub-6G) of NR 5G as an example, full coverage is achieved by a static beam design of no more than 8. In FIG. 3, each of the 8 beams has two polarization directions, and numbers before and after the character "/" represents sequential numbers of the two polarization directions, respectively.

According to some embodiments, when the communication device completes reception of an SSB/SIB message, that is, initiating a random access process to complete camping, the gNB continues to use a broadcast static beam illustrated in FIG. 3 when the message 2 (referred to as Msg2, used for a random access request) and the message 4 (referred to as Msg4, used for contention resolution) are sent.

Entering a radio resource control (RRC) connected state, in order to achieve an improved or best UE specific service quality, a physical downlink shared channel (PDSCH) of the gNB is sent using a dynamic beam, and the dynamic beam is obtained based on sounding reference signal (SRS) estimation and precoding matrix indicator (PMI) reporting. In particular, when the SRS/PMI information is not timely or unreliable, it will switch to a static beam to ensure the basic service quality of the UE. Similarly, A physical downlink control channel (PDCCH) and a channel-state information reference signal (CSI-RS) are sent using dynamic beams/static beams.

Furthermore, in the DL direction, a beam information synchronization mechanism between the gNB and the UE is called a beam indication. The beam indication mechanism is completed based on a DL signaling "transmission configuration indication (TCI)". A set of TCI states are configured for the UE via a high-layer signaling. Each TCI state corresponds to a set of CSI-RSs (i.e., Channel State Indication-Reference Signal) or a set of SSBs, indicating that there is an association between a channel propagation state of PDSCH or PDCCH and the corresponding RS. The CSI-RS may be a tracking reference signal (TRS) in some cases, i.e., the TRS is a special CSI-RS.

The way of representing a corresponding association is to indicate a type of quasi co-located (QCL) information, including:

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

'typeA' which is the most common type in an existing network deployment is taken as an example, a TCI state indication informs that a corresponding reference signal and a propagation state of the PDSCH channel are the same in Doppler shift, Doppler spread, average delay, and delay spread. The UE may use the reference signal indicated by the related TCI to obtain a channel state required for channel estimation (CE) of PDSCH/PDCCH reception.

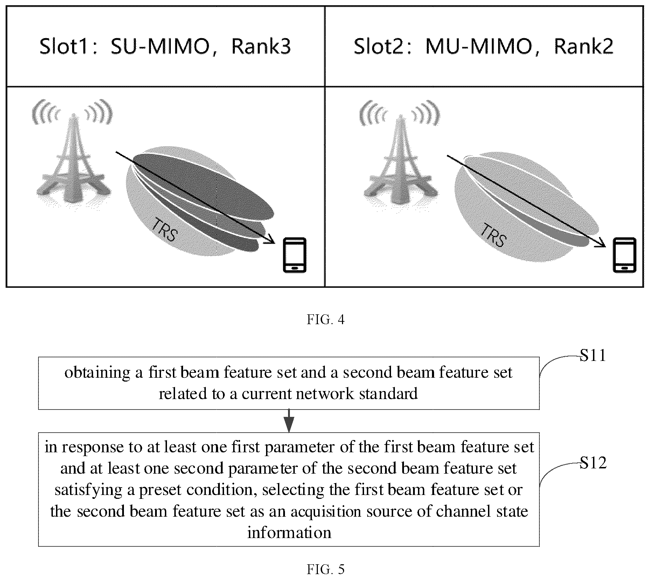

According to some embodiments, a long-period static beam used for TRS cannot be completely consistent with a beam actually used by the PDSCH in a time domain. In addition, since beamforming with a granularity of precoding resource block group (PRG) or sub-band cannot be performed for TRS according to the protocol, a beam for the TRS cannot be completely consistent with a beam in a parallel data system (PDS) in a frequency domain. In order to cover beam changes in the PDS as much as possible, gNB generally configures a wider and more robust static beam for the TRS. As illustrated in FIG. 4, the beam used by gNB to send the TRS is a static wide beam, and it remains unchanged for a certain period of time. However, a PDSCH signal beam is usually the narrowest beam that the gNB may achieve in a spatial domain, and changes with scheduling information (Rank indication, single-user (SU)/multi-user (MU)- multiple input multiple output (MIMO) configuration, etc.), a sending state of a UE, or a feedback state of the UE in the time domain.

In FIG. 4, at Slot1, the gNB configures the service channel PDSCH in the SU-MIMO, with 3 service streams, each of which is configured with the best or near-best dedicated dynamic beam at the current moment; at Slot2, the gNB configures the service channel PDSCH in the MU-MIMO, with 2 service streams, each of which is configured with the best or near-best dedicated dynamic beam at the current moment. However, at Slot1 and Slot2, the TRS corresponding to the TCI QCL 'typeA' state remains unchanged. For example, a non-ideal effect brought by the above static wide beam guiding reception of the dynamic narrow beam may be called a "wide and narrow beam" effect. The "wide and narrow beam" effect may indicate, for example, the influence of a beam width of transmitting and receiving antennas on the signal transmission in wireless communication. The "wide and narrow beam" effect may, for example, include a situation where the static wide beam guides signal reception of the dynamic narrow beam, so that the channel state information does not meet the requirements.

According to some embodiments, although the QCL 'typeA' carried in the TCI state indication informs that the static wide beam for the reference signal (TRS) and/or SSB may provide channel state information ("CSI" for short) available for PDSCH CE, a CSI message may be, for example, Doppler shift, Doppler spread, average delay, delay spread, etc. In fact, due to the "wide and narrow beam" effect, the CSI is inaccurate, including:

average delay spread, in which the static wide beam and the dynamic narrow beam undergo different scattering and diffraction paths, and the static wide beam usually has larger delay spread;

maximum delay spread, in which the static wide beam and the dynamic narrow beam undergo different scattering and diffraction paths, and the static wide beam usually has larger maximum delay spread;

Doppler shift, in which the static wide beam and the dynamic narrow beam undergo different scattering and diffraction paths, the Doppler shifts for both beams are different; and

Doppler spread, in which the static wide beam and the dynamic narrow beam undergo different scattering and diffraction paths, and the Doppler spreads for both beams are different.

According to some embodiments, for service channel (PDSCH/PDCCH) reception of 5G, may for example, strictly follow in default that CSI (such as Doppler shift, Doppler spread, average delay, delay spread) is obtained based on the QCL reference signal indicated by the TCI state. In view of the "wide and narrow beam" effect, the CSI obtained by the corresponding static wide beam cannot accurately match the actual performance of the dynamic narrow beam. Generally, the farther the UE is in the coverage of the base station, the more significant the "wide and narrow beam" effect, and the CSI obtained by the corresponding static wide beam is less accurate than the CSI obtained by the dynamic narrow beam.

In some embodiments, for PDSCH TM7/8/9 service channel reception in the 4th generation (4G) mobile communication technology, a cell-specific reference signal (CRS) may be for example, used in default to obtain the CSI (e.g., Doppler shift, Doppler spread, average delay, delay spread). In view of the "wide and narrow beam" effect, the CSI obtained by the corresponding static wide beam cannot accurately match the actual performance of the dynamic narrow beam. Generally, the farther the UE is in the coverage of the base station, the more significant the "wide and narrow beam" effect, and the CSI obtained by the corresponding static wide beam is less accurate than the CSI obtained by the dynamic narrow beam.

FIG. 5 is a flowchart illustrating a method for beam sensing according to an embodiment. As illustrated in FIG. 5, the method for beam sensing may be used in a broadband wireless communication system supporting beamforming, such as a Long Term Evolution (LTE) system, a NR system, a sixth generation (6G) mobile communication technology system, etc., The method includes the following steps at S11-S12.

At S11, a first beam feature set and a second beam feature set related to a current network standard are obtained.

According to some embodiments, the network standard may indicate, for example, a communication standard and protocol for different mobile communication networks. The current network standard in the embodiments of the invention may be, for example, one of network standards supported by the communication device, and is not a narrowly understood network standard that is currently in use. The current network standard does not specifically refer to a fixed network standard. For example, when a specific network standard corresponding to the current network standard changes, the current network standard may also change accordingly. For example, when a time point at which the method for beam sensing is executed changes, the current network standard may also change accordingly.

In some embodiments, the network standard may be a network standard of 2nd-Generation (2G) wireless telephone technology, which is represented by a global system for mobile communication(GSM), a network standard of 3rd-generation (3G) mobile communication technology, which is represented by wideband code division multiple access (WCDMA), a network standard of 4th-generation (4G) mobile communication technology, which is represented by long term evolution (LTE), a network standard of 5th-generation (5G) mobile communication technology, which is represented by NR, or the like.

In some embodiments, the first beam feature set may include, for example, a DL static beam feature set. The first beam feature set may be, for example, a set including at least one beam feature. The corresponding number of the first beam feature set is not limited in the embodiments of the invention. The name of the first beam feature set is also not limited in the embodiments of the invention, and the first beam feature set may also be referred to as at least one first beam feature. The DL static beam feature set may include, for example, at least one DL static beam feature. The DL static beam feature set does not specifically refer to a fixed set. For example, when a number of features included in the first beam feature set changes, the first beam feature set may also change accordingly. For example, when any beam feature in the first beam feature set changes, the first beam feature set may also change accordingly.

In some embodiments, the second beam feature set may include, for example, a DL dynamic beam feature set. The second beam feature set may be, for example, a set including at least one beam feature. The corresponding number of the second beam feature set is not limited in the embodiments of the invention. The name of the second beam feature set is also not limited in the embodiments of the invention, and the second beam feature set may also be referred to as at least one second beam feature. The DL dynamic beam feature set may include, for example, at least one DL dynamic beam feature. The DL dynamic beam feature set does not specifically refer to a fixed set. For example, when a number of features included in the second beam feature set changes, the second beam feature set may also change accordingly. For example, when any beam feature in the second beam feature set changes, the second beam feature set may also change accordingly.

According to some embodiments, when it is determined that the current network standard supports DL dynamic beamforming, the first beam feature set and the second beam feature set related to the current network standard may be obtained. The order in which the first beam feature set and the second beam feature set are obtained is not limited. For example, the first beam feature set may be obtained first, and the second beam feature set may be then obtained. For example, the second beam feature set may be obtained first, and the first beam feature set may be then obtained. For example, the first beam feature set and the second beam feature set may be obtained at the same time.

According to some embodiments, when it is determined that the current network standard supports DL dynamic beamforming, a DL static beam feature set and a DL dynamic beam feature set related to the current network standard may be obtained. The DL static beam feature set and the DL dynamic beam feature set are not obtained in any particular order. For example, the DL static beam feature set and the DL dynamic beam feature set may be obtained at the same time or separately. For example, the DL static beam feature set may be obtained first and the DL dynamic beam feature set may be then obtained. As the DL static beam feature set and the DL dynamic beam feature set both include at least one beam feature, it is also possible to sequentially obtain a DL static beam feature, a DL dynamic beam feature, another DL static beam feature, etc. For example, the two sets may be obtained alternately or non-alternatingly. The specific process of obtaining the DL static beam feature set and the DL dynamic beam feature set corresponding to the current network standard is not limited in the embodiments of the invention.

At S12, in response to at least one first parameter of the first beam feature set and at least one second parameter of the second beam feature set satisfying a preset condition, the first beam feature set or the second beam feature set is selected as an acquisition source of CSI, in which the first beam feature set is related to the at least one first parameter and the second beam feature set is related to the at least one second parameter.

In some embodiments, the preset condition may be, for example, a condition used to determine an acquisition source corresponding to CSI, and different preset condition may correspond to different acquisition sources, for example. The preset condition does not specifically refer to a fixed condition. For example, when a condition modification instruction for the preset condition is received, the preset condition may also change accordingly. For example, when a parameter in the preset condition changes, the preset condition may also change accordingly. The preset condition may include, for example, whether an RRC connection of the terminal is reconfigured or released, whether a feature recognition result is the same as a preset result, whether a ratio of the feature recognition result being the preset result is greater than a ratio threshold, etc.

In some embodiments, the CSI may be used to describe a channel property of a communication link. For example, when a time point of obtaining the CSI changes, the CSI may also change accordingly.

In some embodiments, the acquisition source indicates an acquisition source of the CSI, which includes but is not limited to an acquisition source of dynamic beam features and an acquisition source of static beam features.

In some or related embodiments, the first beam feature set and the second beam feature set related to the current network standard are obtained; in response to the at least one first parameter of the first beam feature set and the at least one second parameter of the second beam feature set satisfying the preset condition, the first beam feature set or the second beam feature set is selected as the acquisition source of the CSI, in which the first beam feature set is related to the at least one first parameter and the second beam feature set is related to the at least one second parameter. Therefore, a mechanism for beam sensing may be provided. The acquisition source corresponding to the CSI may be determined according to whether the at least one first parameter of the first beam feature set and the at least one second parameter of the second beam feature set satisfy the preset condition, which may improve the accuracy of determining the acquisition source corresponding to the CSI, and reduce the situation where determination of the CSI is inaccurate due to the fact that the CSI required for channel estimation does not match the acquisition source. As such, the accuracy of obtaining the CSI may be improved, the reception state of the communication device may be improved, and the communication quality of the communication device may be improved.

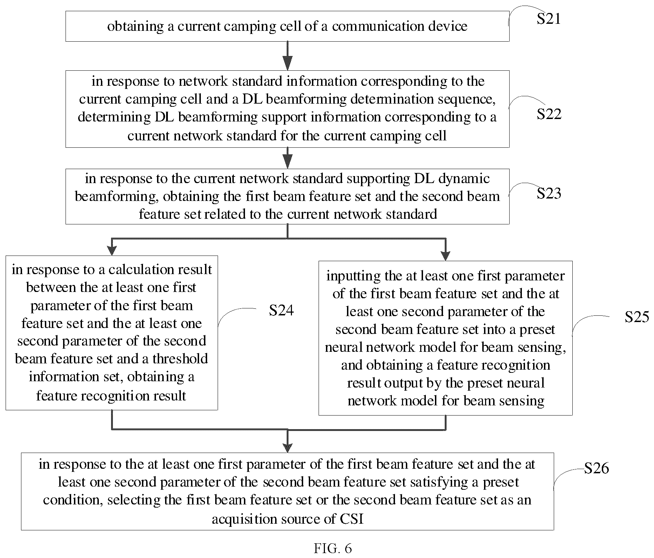

FIG. 6 is a flowchart illustrating a method for beam sensing according to an embodiment. As illustrated in FIG. 6, the method for beam sensing may be used in a wireless communication scenario. The method includes the following steps at S21-S26.

At S21, a current camping cell of a communication device is obtained.

According to some embodiments, for example, the current camping cell of the communication device (i.e., the cell that the communication device currently camps on) may be obtained. For example, it is obtained that the current camping cell of the communication device may be cell A. The communication device may also be called a terminal, and the name of the communication device is not limited in the embodiments of the invention.

At S22, in response to network standard information corresponding to the current camping cell and a DL beamforming determination sequence, DL beamforming support information corresponding to a current network standard for the current camping cell is determined.

According to some embodiments, the network standard information indicates a type of the network standard, and the network standard information corresponding to the current camping cell may be, for example, a 4G network standard.

In some embodiments, the DL beamforming determination sequence may be, for example, a preset process of determining the DL beamforming support information. For example, the communication device modifies the DL beamforming determination sequence according to a received sequence adjustment instruction.

According to some embodiments, the DL beamforming support information may indicate, for example, whether DL dynamic beamforming is supported.

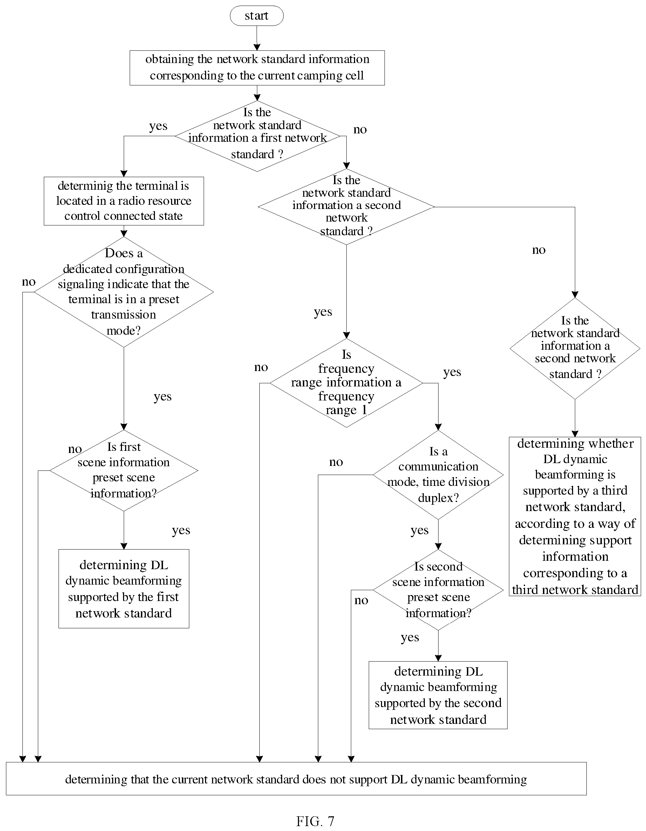

According to some embodiments, FIG. 7 is a flowchart illustrating a method for determining DL beamforming support information according to an embodiment. As illustrated in FIG. 7, the method includes:

According to some embodiments, in response to the network standard information corresponding to the current camping cell and the DL beamforming determination sequence, determining the DL beamforming support information corresponding to the current network standard for the current camping cell includes:

> obtaining the network standard information corresponding to the current camping cell;
> in response to the network standard information corresponding to the current camping cell being a first network standard, determining that the communication device is in a radio resource control connected state (RRC_CONNECTED);
> in response to a dedicated configuration signaling indicating that the communication device is in a preset transmission mode, obtaining first scene information corresponding to the current camping cell; and in response to the first scene information being preset scene information, determining that DL beamforming support information corresponding to the first network standard is that the first network standard supports DL dynamic beamforming.

According to some embodiments, in response to the network standard information corresponding to the current camping cell and the DL beamforming determination sequence, determining the DL beamforming support information corresponding to the current network standard for the current camping cell, includes:

> obtaining the network standard information corresponding to the current camping cell;
> in response to the network standard information corresponding to the current camping cell being a first network standard, determining that the communication device is in a radio resource control connected state (RRC_CONNECTED); and
> in response to a dedicated configuration signaling indicating that the communication device is not in a preset transmission mode or first scene information is not preset scene information, determining that DL beamforming support information corresponding to the first network standard is that the first network standard does not support DL dynamic beamforming.

Therefore, in the first network standard, the DL beamforming support information may be determined according to the dedicated configuration signaling and the first scene information, which may improve the accuracy of determining the DL beamforming support information and the accuracy of determining the acquisition source.

In some embodiments, the first network standard may be, for example, a 4G network standard.

According to some embodiments, the preset transmission mode may be, for example, at least one of TM7, TM8 and TM9. For example, in the case that the dedicated configuration signaling indicates that the communication device is in the TM7, the first scene information corresponding to the current camping cell may be obtained.

In some embodiments, the first scene information may indicate, for example, scene information corresponding to the current camping cell. The first scene information does not specifically refer to fixed information. For example, the first scene information may be obtained by using a scene recognition way, which is not limited in the embodiments of the invention.

According to some embodiments, the preset scene information may be, for example, predetermined scene information. The preset scene information may be, for example, high-speed rail scene information or subway scene information. For example, in the case that the network standard information corresponding to the current camping cell is the 4G network standard, it is determined that the communication device is in the RRC_CONNECTED, and in the case that the dedicated configuration signaling indicates that the communication device is in the TM7 and the first scene information corresponding to the current camping cell is obtained as a high-speed rail scene, it is determined that DL beamforming support information corresponding to the 4G network standard is that DL dynamic beamforming is supported.

In the case that the network standard information corresponding to the current camping cell is the 4G network standard, it is determined that the communication device is in the RRC_CONNECTED, and in the case that the dedicated configuration signaling indicates that the communication device is not in the preset transmission mode, it is determined that the DL beamforming support information corresponding to the 4G network standard is that the DL dynamic beamforming is not supported.

In the case that the network standard information corresponding to the current camping cell is the 4G network standard, it is determined that the communication device is in the RRC_CONNECTED, and in the case that the dedicated configuration signaling indicates that the communication device is in the preset transmission mode and the first scene information corresponding to the current camping cell is not the preset scene information, it is determined that the DL beamforming support information corresponding to the 4G network standard is that the DL dynamic beamforming is not supported.

According to some embodiments, the method further includes: in response to determining that an RRC signaling reconfiguration occurs in the RRC_CONNECTED, redetermining the DL beamforming support information corresponding to the current network standard for the current camping cell. The step of redetermining the DL beamforming support information corresponding to the current network standard for the current camping cell again is applicable to the case where the current network standard is the first network standard or the second network standard, which is not limited in the embodiments of the invention. Therefore, when the RRC signaling reconfiguration occurs, the DL beamforming support information may be redetermined to improve the accuracy of determining the DL beamforming support information and the accuracy of determining the acquisition source.

According to some embodiments, when the RRC signaling reconfiguration occurs in the RRC_CONNECTED, it may be determined whether the communication device is in the RRC _CONNECTED, and when it is determined that the communication device is in the RRC_CONNECTED, the DL beamforming support information corresponding to the current network standard for the current camping cell may be re-determined according to the dedicated configuration signaling and the first scene information.

According to some embodiments, in response to the network standard information corresponding to the current camping cell and the DL beamforming determination sequence, determining the DL beamforming support information corresponding to the current network standard for the current camping cell, includes:

in response to the network standard information corresponding to the current camping cell being not a first network standard, determining that the network standard information corresponding to the current camping cell is a second network standard; and
in response to frequency range information of the current camping cell being a first frequency range, a communication mode of the current camping cell being time division duplex, and second scene information corresponding to the current camping cell being preset scene information, determining that DL beamforming support information corresponding to the second network standard is that the second network standard supports DL dynamic beamforming.

For example, in an embodiment of the invention, in response to the network standard information corresponding to the current camping cell and the DL beamforming determination sequence, determining the DL beamforming support information corresponding to the current network standard for the current camping cell, includes:

in response to the network standard information corresponding to the current camping cell being not a first network standard, determining that the network standard information corresponding to the current camping cell is the second network standard;
obtaining frequency range information corresponding to the current camping cell;
in response to the frequency range information being a Frequency range 1 (FR1), obtaining a communication mode of the current camping cell;
in response to the communication mode being time division duplex, obtaining second scene information corresponding to the current camping cell; and
in response to the second scene information being preset scene information, determining that DL beamforming support information corresponding to the second network standard is that the second network standard supports DL dynamic beamforming.

According to some embodiments, in response to the network standard information corresponding to the current camping cell and the DL beamforming determination sequence, determining the DL beamforming support information corresponding to the current network standard for the current camping cell, includes:

in response to the network standard information corresponding to the current camping cell being not a first network standard, determining that the network standard information corresponding to the current camping cell is a second network standard; and

in response to frequency range information of the current camping cell being not a first frequency range, a communication mode of the current camping cell being not time division duplex, or second scene information corresponding to the current camping cell being not preset scene information, determining that DL beamforming support information corresponding to the second network standard is that the second network standard does not support DL dynamic beamforming.

Therefore, in the second network standard, the DL beamforming support information may be determined according to the frequency range information and the communication mode, and the DL beamforming support information may be determined according to different information in different network standards, which may improve the accuracy of determining the DL beamforming support information and the accuracy of determining the acquisition source.

According to some embodiments, the second network standard may be, for example, a 5G network standard.

According to some embodiments, the frequency range information may indicate a frequency range of the current camping cell. The frequency range information may include, for example, a FR1, FR2, and the like.

According to some embodiments, the communication mode may include, for example, time division duplex and frequency division duplex.

In some embodiments, it is determined that the network standard information corresponding to the current camping cell is the 5G network standard, and the frequency range information corresponding to the current camping cell is obtained. In response to the frequency range information being the FR1, the communication mode of the current camping cell is obtained. In response to the communication mode being the time division duplex, the second scene information corresponding to the current camping cell is obtained. In response to the second scene information being a subway scene, it is determined that DL beamforming support information corresponding to the 5G network standard is that the 5G network standard supports DL dynamic beamforming.

According to some embodiments, in response to determining that an RRC signaling reconfiguration occurs in the RRC_CONNECTED, DL beamforming support information corresponding to the second network standard for the current camping cell is re-determined.

In some embodiments, in response to the network standard information corresponding to the current camping cell and the DL beamforming determination sequence, determining the DL beamforming support information corresponding to the current network standard for the current camping cell, includes:

in response to the network standard information corresponding to the current camping cell being not a second network standard, determining whether the network standard information corresponding to the current camping cell is a third network standard; and

in response to determining that the network standard information corresponding to the current camping cell is the third network standard, determining the DL beamforming support information corresponding to the current network standard for the current camping cell by using a determination mode corresponding to the third network standard.

The third network standard may be, for example, a 6G or higher network standard.

According to some embodiments, in response to determining that an RRC signaling reconfiguration occurs in the RRC _CONNECTED, DL beamforming support information corresponding to the third network standard for the current camping cell is re-determined.

In some embodiments, for example, when it is determined that the network standard information corresponding to the current camping cell is not the second network standard, it may be determined whether the network standard information corresponding to the current camping cell is the third network standard. When it is determined that the network standard information corresponding to the current camping cell is the third network standard, the determination mode corresponding to the third network standard may be used to determine whether the third network standard supports DL dynamic beamforming.

According to some embodiments, it is determined that the network standard information corresponding to the current camping cell is the 5G network standard, and the frequency range information corresponding to the current camping cell is obtained. In the case that the frequency range information is not the FR1, it is determined that the DL beamforming support information corresponding to the 5G network standard is that the 5G network standard does not support DL dynamic beamforming.

In some embodiments, it is determined that the network standard information corresponding to the current camping cell is the 5G network standard, and the frequency range information corresponding to the current camping cell is obtained. In the case that the frequency range information is the FR1, the communication mode of the current camping cell is obtained. In the case that the communication mode is not the time division duplex, it is determined that the DL beamforming support information corresponding to the 5G network standard is that the 5G network standard does not support DL dynamic beamforming.

In some embodiments, it is determined that the network standard information corresponding to the current camping cell is the 5G network standard, and the frequency range information corresponding to the current camping cell is obtained. In the case that the frequency range information is the FR1, the communication mode of the current camping cell is obtained. In the case that the communication mode is the time division duplex, the second scene information corresponding to the current camping cell is obtained. In the case that the second scene information is a subway scene or a high-speed rail scene, it is determined that the DL beamforming support information corresponding to the 5G network standard is that the 5G network standard does not support DL dynamic beamforming.

In some embodiments, it is determined that the network standard information corresponding to the current camping cell is the 5G network standard, and the frequency range information corresponding to the current camping cell is obtained. In the case that the frequency range information is the FR1, the communication mode of the current camping cell is obtained. In the case that the communication mode is the time division duplex, the second scene information corresponding to the current camping cell is obtained. In the case that the second scene information is not the subway scene or the high-speed rail scene, it is determined that the DL beamforming support information corresponding to the 5G network standard is that the 5G network standard supports DL dynamic beamforming.

According to some embodiments, for example, when the network standard information corresponding to the current camping cell is not the 5G network standard, it is determined whether the network standard information corresponding to the current camping cell is the 6G network standard. For example, when the network standard information corresponding to the current camping cell is the 6G network standard, a determination mode corresponding to the 6G network standard may be used to determine DL beamforming support information corresponding to the 6G network standard.

At S23, in response to the current network standard supporting DL dynamic beamforming, the first beam feature set and the second beam feature set related to the current network standard are obtained.

The specific process is as described above, which will not be repeated here.

According to some embodiments, the first beam feature set includes a DL static beam feature set, and the second beam feature set includes a DL dynamic beam feature set, and obtaining the first beam feature set and the second beam feature set related to the current network standard includes:

obtaining the DL static beam feature set related to a current network standard by performing feature extraction on a synchronization signal (SS) and/or a reference signal (RS) of a broadband wireless communication system with DL beamforming enabled; and

obtaining the DL dynamic beam feature set related to the current network standard by performing feature extraction on a demodulation reference signal (DMRS) of a broadband wireless communication system with DL dynamic beamforming enabled.

The SS and/or RS includes at least one of:

a primary synchronization signal (PSS) in the first network standard;
a secondary synchronization signal (SSS) in the first network standard;
a cell-specific reference signal (CRS) in the first network standard;
a SSB in the second network standard; or
a TRS in the second network standard.

The DL static beam feature set includes but is not limited to a signal to interference plus noise ratio (SINR), a maximum delay spread (Tmax), a root mean square delay spread (Trms), and a maximum Doppler (hereinafter to be referred as "Doppler"), and may specifically include:

a primary synchronization signal-signal to interference plus noise ratio (PSS-SINR), a secondary synchronization signal - signal to interference plus noise ratio (SSS-SINR), a cell-specific reference signal - signal to interference plus noise ratio (CRS-SINR), a cell-specific reference signal - maximum delay spread (CRS-Tmax), a cell-specific reference signal - root mean square delay spread (CRS-Trms), a cell-specific reference signal-maximum Doppler (CRS-Doppler), which corresponds to the first network standard; and

a SSS-SINR, a tracking reference signal channel-state information - signal to interference plus noise ratio (TRS CSI-SINR), a tracking reference signal - maximum delay spread (TRS-Tmax), a cell-specific reference signal - root mean square delay spread (CRS-Trms), a tracking reference signal - maximum Doppler (TRS-Doppler), which corresponds to the second network standard.

The first network standard may be, for example, a 4G network standard, and the second network standard may be, for example, a 5G network standard.

The DMRS includes at least one of: a PDSCH DMRS in the first network standard or the second network standard; or a PDCCH DMRS in the second network standard.

The DL dynamic beam feature set includes but is not limited to the SINR, the Tmax, the Trms, and the Doppler, and may specifically include:

a physical downlink control channel - signal to interference plus noise ratio (PDCCH-SINR), a physical downlink control channel - maximum delay spread (PDCCH-Tmax), a physical downlink control channel - root mean square delay spread (PDCCH-Trms), a physical downlink control channel - maximum Doppler (PDCCH-Doppler), which corresponds to the first network standard or the second network standard; and

a PDCCH-SINR, a PDCCH-Tmax, a PDCCH-Trms, a PDCCH-Doppler, which corresponds to the second network standard.

The first network standard may be, for example, a 4G network standard, and the second network standard may be, for example, a 5G network standard.

At S24, in response to a calculation result between the at least one first parameter of the first beam feature set and the at least one second parameter of the second beam feature set and at least one piece of threshold information, a feature recognition result is obtained, in which the feature recognition result indicates whether the at least one first parameter of the first beam feature set and the at least one second parameter of the second beam feature set satisfy the preset condition.

The specific process is as described above, which will not be repeated here.

When the calculation result between the at least one first parameter of the first beam feature set and the at least one second parameter of the second beam feature set is obtained, the first parameter and the second parameter may be, for example, parameters of the same beam feature, which includes but is not limited to the SINR, the Tmax, the Trms, the Doppler, etc.

According to some embodiments, in response to the calculation result between the at least one first parameter of the first beam feature set and the at least one second parameter of the second beam feature set and the at least one piece of threshold information, obtaining the feature recognition result, includes:

obtaining the feature recognition result by comparing a difference result and/or a ratio result between the at least one first parameter of the first beam feature set and the at least one second parameter of the second beam feature set with the at least one piece of threshold information.

The feature recognition result may be, for example, a recognition result with a wide and narrow beam effect . The recognition result with the wide and narrow beam effect may for example correspond to a network standard. The recognition result with the wide and narrow beam effect may be for example, determined by different network standards according to different recognition modes.

Each threshold in the at least one piece of threshold information may be set, for example, according to experience or a modulation effect. For example, it may be set according to the accuracy of the recognition result with the wide and narrow beam effect, which is not limited in the embodiments of the invention.

It needs to be noted that when there are a plurality of beam features corresponding to the at least one first parameter, the at least one first parameter may, for example, include at least one parameter of each of the plurality of beam features. When there are a plurality of beam features corresponding to the at least one second parameter, the at least one second parameter may, for example, include at least one parameter of each of the plurality of beam features.

According to some embodiments, in response to the calculation result between the at least one first parameter of the first beam feature set and the at least one second parameter of the second beam feature set and the at least one piece of threshold information, obtaining the feature recognition result, includes:

in response to a calculation result between any first parameter in the first beam feature set and any second parameter in the second beam feature set and the at least one piece of threshold information, obtaining the feature recognition result, in which the any first parameter and the any second parameter correspond to the same beam feature.

In some embodiments, when the beam feature is a SINR, the at least one first parameter includes at least one of: a CRS-SINR, a PSS-SINR or a SSS-SINR, and at least one second parameter includes at least one of: a PDSCH-SINR; or the at least one first parameter includes at least one of: a TRS CSI-SINR or a SS-SINR, and the at least one second parameter includes at least one of: a PDSCH-SINR or a PDCCH-SINR.

In some embodiments, when the beam feature is a Tmax, the at least one first parameter includes a CRS-Tmax, and the at least one second parameter includes a PDSCH-Tmax; or

the at least one first parameter includes a TRS-Tmax, and the at least one second parameter includes at least one of: a PDSCH-Tmax or a PDCCH-Tmax.

In some embodiments, when the beam feature is a Trms, the at least one first parameter includes a CRS-Trms, and the at least one second parameter includes a PDSCH-Trms; or

the at least one first parameter includes a TRS-Trms, and the at least one second parameter includes at least one of: a PDSCH-Trms or a PDCCH-Trms.

In some embodiments, the beam feature is the Doppler, the at least one first parameter includes the CRS-SINR, the PSS-SINR, the SSS-SINR and the CRS-Doppler, and the at least one second parameter includes at least one of: the PDSCH-SINR or the PDSCH-Doppler; or

the at least one first parameter includes at least one of: the TRS CSI-SINR, the SS-SINR or the TRS-Doppler, and the at least one second parameter includes at least one of: the PDSCH-SINR, the PDCCH-SINR, the PDCCH-Doppler or the PDSCH-Doppler.

According to some embodiments, in response to the calculation result between the at least one first parameter of the first beam feature set and the at least one second parameter of the second beam feature set and the at least one piece of threshold information, obtaining the feature recognition result includes:

in response to a calculation result between two first parameters of the first beam feature set and two second parameters of the second beam feature set and the at least one piece of threshold information, obtaining the feature recognition result, in which the two first parameters and the two second parameters correspond to two different beam features, and the calculation result includes two results obtained by performing calculation processing on any first parameter and any second parameter with the same beam feature.

In some embodiments, the at least one first parameter includes at least one of: the CRS-Tmax or the CRS-Doppler, and the at least one second parameter includes at least one of: the PDSCH-Doppler or the PDCCH-Tmax; or

the at least one first parameter includes at least one of: the TRS-Tmax or the TRS-Doppler, and the at least one second parameter includes at least one of: the PDSCH-Tmax, the PDCCH-Tmax, the PDSCH-Doppler, or the PDCCH-Doppler.

In some embodiments, the at least one first parameter includes at least one of: the CRS-Trms or the CRS-Doppler, and the at least one second parameter includes at least one of: the PDSCH-Trms or the PDSCH-Doppler; or

the at least one first parameter includes at least one of: the TRS-Trms or the TRS-Doppler, and the at least one second parameter includes at least one of: the PDSCH-Trms, the PDCCH-Trms, the PDSCH-Doppler, or the PDCCH-Doppler.

In some embodiments, the at least one first parameter includes at least one of: the CRS-SINR, the PSS-SINR, the SSS-SINR or the CRS-Tmax, and the at least one second parameter includes at least one of: the PDSCH-SINR or the PDSCH-Tmax; or

the at least one first parameter includes at least one of: the TRS CSI-SINR, the SS-SINR or the TRS-Tmax, and the at least one second parameter includes at least one of: the PDSCH-SINR, the PDCCH-SINR, the PDSCH-Tmax or the PDCCH-Tmax.

In some embodiments, the at least one first parameter includes at least one of: the CRS-SINR, the PSS-SINR, the SSS-SINR or the CRS-Trms, and the at least one second parameter includes at least one of: the PDSCH-SINR or the PDSCH-Tmax; or

the at least one first parameter includes at least one of: the TRS CSI-SINR, the SS-SINR or the TRS-Trms, and the at least one second parameter includes at least one of: the PDSCH-SINR, the PDCCH-SINR, the PDSCH-Trms or the PDCCH-Trms.

According to some embodiments, in response to the calculation result between the at least one first parameter of the first beam feature set and the at least one second parameter of the second beam feature set and the at least one piece of threshold information, obtaining the feature recognition result includes:

in response to a calculation result between three first parameters of the first beam feature set and three second parameters of the second beam feature set and the at least one piece of threshold information, obtaining the feature recognition result, in which the three first parameters and the three second parameters correspond to three different beam features, and the calculation result includes three results obtained by performing calculation processing on any first parameter and any second parameter with the same beam feature.

In some embodiments, the at least one first parameter includes at least one of: the CRS-SINR, the PSS-SINR, the SSS-SINR, the CRS-Tmax or the CRS-Trms, and the at least one second parameter includes at least one of: the PDSCH-SINR, the PDSCH-Tmax or the PDSCH-Trms; or

the at least one first parameter includes at least one of: the TRS CSI-SINR, the SS-SINR, the TRS-Tmax or the TRS-Trms, and the at least one second parameter includes at least one of: the PDSCH-SINR, the PDCCH-SINR, the PDSCH-Tmax, the PDCCH-Tmax, the PDSCH-Trms or the PDCCH-Trms.

According to some embodiments, when the feature recognition result is determined in response to the calculation result between the at least one first parameter of the first beam feature set and the at least one second parameter of the second beam feature set and the at least one piece of threshold information, a threshold-type design rule may be used, which belongs to a decision design, balances a correct decision rate and a false alarm rate, improves the accuracy of obtaining the feature recognition result, and may further improve the accuracy of determining the acquisition source.

According to some embodiments, in response to the calculation result between the at least one first parameter of the first beam feature set and the at least one second parameter of the second beam feature set and the at least one piece of threshold information, obtaining the feature recognition result includes:

in response to a first difference between any second parameter and any first parameter being greater than a first threshold, determining that the feature recognition result is a preset result, in which the first threshold represents an index threshold of a relative SINR, and the preset result indicates that the at least one first parameter of the first beam feature set and the at least one second parameter of the second beam feature set satisfy the preset condition. Any second parameter and any first parameter may, for example, correspond to the same beam feature.

According to some embodiments, the at least one first parameter includes at least one of: the CRS-SINR, the PSS-SINR, or the SSS-SINR; and the at least one second parameter includes the PDSCH-SINR; or

the at least one first parameter includes at least one of: the TRS CSI-SINR or the SS-SINR; and the at least one second parameter includes at least one of: the PDSCH-SINR or the PDCCH-SINR.

For example, in an embodiment of the invention, in the case that the current network standard is the 4G network standard, and a difference between the PDSCH-SINR and the CRS-SINR (or the PSS-SINR or the SSS-SINR) is greater than the first threshold, it may be determined that the feature recognition result is the preset result, which may indicate for example that the wide and narrow beam effect occurs. In the case that the difference between the PDSCH-SINR and the CRS-SINR (or the PSS-SINR or the SSS-SINR) is not greater than the first threshold, it may be determined that the feature recognition result is not the preset result. For example, in the case that the difference between the PDSCH-SINR and the CRS-SINR is greater than the first threshold, it may be determined that a recognition result for the wide and narrow beam effect is that the wide and narrow beam effect occurs; and in the case that the difference between the PDSCH-SINR and the CRS-SINR is not greater than the first threshold, it may be determined that the recognition result for the wide and narrow beam effect is that the wide and narrow beam effect does not occur. The second threshold may represent, for example, the index threshold of relative SINR, "th-sinr-for-BF", the value range of which may be, for example, 5 to 10 dB.

For example, in an embodiment of the invention, when the current network standard is the 5G network standard, it may be determined based on a difference between the PDSCH-SINR (or the PDCCH-SINR) and the TRS CSI-SINR (or the SS-SINR) and the first threshold that the feature recognition result is a preset result. The first threshold may represent, for example, the index threshold of relative SINR, "th-sinr-for-BF", the value range of which may be, for example, 5 to 10 dB.

For example, in an embodiment of the invention, when a difference between the PDSCH-SINR (or the PDCCH-SINR) and the TRS CSI-SINR (or the SS-SINR) is greater than the first threshold, it may be determined that the feature recognition result is the preset result. For example, it may be determined that the recognition result for the wide and narrow beam effect is that the wide and narrow beam effect occurs. In the case that the difference between the PDSCH-SINR (or the PDCCH-SINR) and the TRS CSI-SINR (or the SS-SINR) is not greater than the first threshold, it may be determined that the feature recognition result is not the preset result. For example, it may be determined that the recognition result for the wide and narrow beam effect is that the wide and narrow beam effect does not occur.

According to some embodiments, in response to the calculation result between the at least one first parameter of the first beam feature set and the at least one second parameter of the second beam feature set and the at least one piece of threshold information, obtaining the feature recognition result includes:

in response to a first ratio between any first parameter and any second parameter being greater than a second threshold, determining that the feature recognition result is a preset result, in which the second threshold represents an index threshold of a relative maximum delay spread, and the preset result indicates that the at least one first parameter of the first beam feature set and the at least one second parameter of the second beam feature set satisfy the preset condition.

According to some embodiments, the at least one first parameter includes the CRS-Tmax, and the at least one second parameter includes the PDSCH-Tmax; or

the at least one first parameter includes the TRS-Tmax, and the at least one second parameter includes at least one of the PDSCH-Tmax or the PDCCH-Tmax. The second threshold may represent, for example, the index threshold of relative Tmax, "th-tmax-for-BF", the value range of which may be, for example, 1.5 to 3.

For example, in an embodiment of the invention, in the case that the current network standard is the 4G network standard, and a ratio between the CRS-Tmax and the PDSCH-Tmax is greater than the second threshold, it may be determined that the feature recognition result is the preset result. For example, it may be determined that the recognition result for the wide and narrow beam effect is that the wide and narrow beam effect occurs. In the case that the ratio between the CRS-Tmax and the PDSCH-Tmax is not greater than the second threshold, it may be determined that the feature recognition result is not the preset result. For example, it may be determined that the recognition result for the wide and narrow beam effect is that the wide and narrow beam effect does not occur.

For example, in an embodiment of the invention, in the case that the current network standard is the 5G network standard, and a ratio between the TRS-Tmax and the PDSCH-Tmax (or the PDCCH-Tmax) is greater than the second threshold, it may be determined that the feature recognition result is the preset result. For example, it may be determined that the recognition result for the wide and narrow beam effect is that the wide and narrow beam effect occurs. In the case that the ratio between the TRS-Tmax and the PDSCH-Tmax (or the PDCCH-Tmax) is not greater than the fourth threshold, it may be determined that the feature recognition result is not the preset result. For example, it may be determined that the recognition result for the wide and narrow beam effect is that the wide and narrow beam effect does not occur.

According to some embodiments, in response to the calculation result between the at least one first parameter of the first beam feature set and the at least one second parameter of the second beam feature set and the at least one piece of threshold information, obtaining the feature recognition result includes:

in response to a second ratio between any first parameter and any second parameter being greater than a third threshold, determining that the feature recognition result is a preset result, in which the third threshold represents an index threshold of a relative Trms, and the preset result indicates that the at least one first parameter of the first beam feature set and the at least one second parameter of the second beam feature set satisfy the preset condition.

According to some embodiments, the at least one first parameter includes the CRS-Trms, and the at least one second parameter includes the PDSCH-Trms; or

the at least one first parameter includes the TRS-Trms, and at least one second parameter includes at least one of: the PDSCH-Trms or the PDCCH-Trms. The third threshold may represent, for example, the index threshold of relative Trms, "th-trms-for-BF", the value range of which may be, for example, 2 to 4.

For example, in an embodiment of the invention, in the case that the current network standard is the 4G network standard, and a ratio between the CRS-Trms and the PDSCH-Trms is greater than the third threshold, it may be determined that the feature recognition result is the preset result. For example, it may be determined that the recognition result for the wide and narrow beam effect is that the wide and narrow beam effect occurs. In the case that the ratio between the CRS-Trms and the PDSCH-Trms is not greater than the third threshold, it may be determined that the feature recognition result is not the preset result. For example, it may be determined that the recognition result for the wide and narrow beam effect is that the wide and narrow beam effect does not occur.

For example, in an embodiment of the invention, in the case that the current network standard is the 5G network standard, and a ratio between the TRS-Trms and the PDSCH-Trms (or the PDCCH-Trms) is greater than the third threshold, it may be determined that the feature recognition result is the preset result. For example, it may be determined that the recognition result for the wide and narrow beam effect is that the wide and narrow beam effect occurs. In the case that the ratio between the TRS-Trms and the PDSCH-Trms (or the PDCCH-Trms) is not greater than the third threshold, it may be determined that the feature recognition result is not the preset result. For example, it may be determined that the recognition result for the wide and narrow beam effect is that the wide and narrow beam effect does not occur.

According to some embodiments, in response to the calculation result between the at least one first parameter of the first beam feature set and the at least one second parameter of the second beam feature set and the at least one piece of threshold information, obtaining the feature recognition result includes:

in response to a second difference between any SINR in the at least one second parameter and any SINR in the at least one first parameter being greater than a fourth threshold, and a third ratio between any Doppler in the at least one second parameter and any Doppler in the at least one first parameter being less than a fifth threshold, determining that the feature recognition result is a preset result, in which the fourth threshold represents an index threshold of a relative SINR, the fifth threshold represents an index threshold of a relative Doppler, and the preset result indicates that the at least one first parameter of the first beam feature set and the at least one second parameter of the second beam feature set satisfy the preset condition.

According to some embodiments, the at least one first parameter includes at least one of: the CRS-SINR, the PSS-SINR, the SSS-SINR or the CRS-Doppler, and the at least one second parameter includes at least one of the PDSCH-SINR or the PDSCH-Doppler; or

the at least one first parameter includes at least one of: the TRS CSI-SINR, the SS-SINR or the TRS-Doppler, and at least one second parameter includes at least one of: the PDSCH-SINR, the PDCCH-SINR, the PDCCH-Doppler or the PDSCH-Doppler.

For example, in an embodiment of the invention, in the case that the current network standard is the 4G network standard, the feature recognition result is determined based on a difference between the PDSCH-SINR and the CRS-SINR (or the PSS-SINR or the SSS-SINR) and the fourth threshold, as well as a ratio between the PDSCH-Doppler and the CRS-Doppler and the fifth threshold. The fourth threshold may represent, for example, the index threshold of relative SINR, "th-sinr-for-BF", the value range of which may be, for example, 5 to 10 dB. The fifth threshold may represent, for example, the index threshold of relative Doppler, "th-doppler-for-BF", the value range of which may be, for example, 0.7 to 1.3.

For example, in an embodiment of the invention, in the case that the current network standard is the 4G network standard, the difference between the PDSCH-SINR and the CRS-SINR (or the PSS-SINR or the SSS-SINR) is greater than th-sinr-for-BF and the ratio between the PDSCH-Doppler and the CRS-Doppler is less than th-doppler-for-BF, it may be determined that the feature recognition result is the preset result. For example, it may be determined that the recognition result for the wide and narrow beam effect is that the wide and narrow beam effect occurs. In the case that the difference between the PDSCH-SINR and the CRS-SINR (or the PSS-SINR or the SSS-SINR) is not greater than th-sinr-for-BF and/or the ratio between the PDSCH-Doppler and the CRS-Doppler is not less than th-doppler-for-BF, it may be determined that the feature recognition result is not the preset result. For example, it may be determined that the recognition result for the wide and narrow beam effect is that the wide and narrow beam effect does not occur.

In some embodiments, in the case that the current network standard is the 5G network standard, the feature recognition result is determined based on a difference between the PDSCH-SINR (or the PDCCH-SINR) and the TRS CSI-SINR (or the SS-SINR) and the fourth threshold, as well as a ratio between the PDSCH-Doppler (or the PDCCH-Doppler) and the TRS-Doppler and the fifth threshold. The fourth threshold may represent, for example, the index threshold of relative SINR, "th-sinr-for-BF", the value range of which may be, for example, 5 to 10 dB. The fifth threshold may represent, for example, the index threshold of relative Doppler, "th-doppler-for-BF", the value range of which may be, for example, 0.7 to 1.3.

For example, in an embodiment of the invention, in the case that the current network standard is the 5G network standard, the difference between the PDSCH-SINR (or the PDCCH-SINR) and the TRS CSI-SINR (or the SS-SINR) is greater than th-sinr-for-BF, and the ratio between the PDSCH-Doppler (or the PDCCH-Doppler) and the TRS-Doppler is less than th-doppler-for-BF, it may be determined that the feature recognition result is the preset result. For example, it may be determined that the recognition result for the wide and narrow beam effect is that the wide and narrow beam effect occurs. In the case that the difference between the PDSCH-SINR (or the PDCCH-SINR) and the TRS CSI-SINR (or the SS-SINR) is not greater than th-sinr-for-BF, and/or the ratio between the PDSCH-Doppler (or the PDCCH-Doppler) and the TRS-Doppler is not less than th-doppler-for-BF, it may be determined that the feature recognition result is not the preset result. For example, it may be determined that the recognition result for the wide and narrow beam effect is that the wide and narrow beam effect does not occur.

In some embodiments, in response to the calculation result between the at least one first parameter of the first beam feature set and the at least one second parameter of the second beam feature set and the at least one piece of threshold information, obtaining the feature recognition result includes:

in response to a fourth ratio between any Tmax in the at least one second parameter and any Tmax in the at least one first parameter being greater than a sixth threshold, and a fifth ratio between any Doppler in the at least one second parameter and any Doppler in the at least one first parameter being less than a seventh threshold, determining that the feature recognition result is a preset result, in which the sixth threshold represents an index threshold of a relative Tmax, the seventh threshold represents an index threshold of a relative maximum Doppler, the preset result indicates that the at least one first parameter of the first beam feature set and the at least one second parameter of the second beam feature set satisfy the preset condition.

In some embodiments, the at least one first parameter includes at least one of the CRS-Tmax or the CRS-Doppler, and the at least one second parameter includes at least one of the PDSCH-Doppler or the PDCCH-Tmax; or, the at least one first parameter includes at least one of the TRS-Tmax or the TRS-Doppler, and the at least one second parameter includes at least one of: the PDSCH-Tmax, the PDCCH-Tmax, the PDSCH-Doppler, or the PDCCH-Doppler. The sixth threshold may represent, for example, the index threshold of relative Tmax, "th-tmax-for-BF", the value range of which may be, for example, 1.5 to 3. The seventh threshold may represent, for example, the index threshold of relative Doppler, "th-doppler-for-BF", the value range of which may be, for example, 0.7 to 1.3.

For example, in an embodiment of the invention, in the case that the current network standard is the 4G network standard, the ratio between the CRS-Tmax and the PDSCH-Tmax is greater than th-tmax-for-BF, and the ratio between the PDSCH-Doppler and the CRS-Doppler is less than th-doppler-for-BF, it may be determined that the feature recognition result is the preset result. For example, it may be determined that the recognition result for the wide and narrow beam effect is that the wide and narrow beam effect occurs. In the case that the ratio between the CRS-Tmax and the PDSCH-Tmax is not greater than th-tmax-for-BF and/or the ratio between the PDSCH-Doppler and the CRS-Doppler is not less than th-doppler-for-BF, it may be determined that the feature recognition result is not the preset result. For example, it may be determined that the recognition result for the wide and narrow beam effect is that the wide and narrow beam effect does not occur.

In some embodiments, in the case that the current network standard is the 4G network standard, the feature recognition result is determined based on the ratio between the TRS-Tmax and the PDSCH-Tmax (or the PDCCH-Tmax) and the sixth threshold, as well as the ratio between the PDSCH-Doppler (or the PDCCH-Doppler) and the TRS-Doppler and the seventh threshold. The sixth threshold may represent, for example, the index threshold of relative Tmax, "th-tmax-for-BF", the value range of which may be, for example, 1.5 to 3. The seventh threshold may represent, for example, the index threshold of relative Doppler, "th-doppler-for-BF", the value range of which may be, for example, 0.7 to 1.3.

For example, in an embodiment of the invention, in the case that the ratio between the TRS-Tmax and the PDSCH-Tmax (or the PDCCH-Tmax) is greater than th-tmax-for-BF and the ratio between the PDSCH-Doppler (or the PDCCH-Doppler) and the TRS-Doppler is less than th-doppler-for-BF, it may be determined that the feature recognition result is the preset result. For example, it may be determined that the recognition result for the wide and narrow beam effect is that the wide and narrow beam effect occurs. In the case that the ratio between the TRS-Tmax and the PDSCH-Tmax (or the PDCCH-Tmax) is not greater than th-tmax-for-BF and/or the ratio between the PDSCH-Doppler (or the PDCCH-Doppler) and the TRS-Doppler is not less than th-doppler-for-BF, it may be determined that the feature recognition result is not the preset result. For example, it may be determined that the recognition result for the wide and narrow beam effect is that the wide and narrow beam effect does not occur.

In some embodiments, in response to the calculation result between the at least one first parameter of the first beam feature set and the at least one second parameter of the second beam feature set and the at least one piece of threshold information, obtaining the feature recognition result includes:

in response to a sixth ratio between any maximum Trms in the at least one second parameter and any maximum Trms in the at least one first parameter being greater than an eighth threshold, and a seventh ratio between any Doppler in the at least one second parameter and any Doppler in the at least one first parameter being less than a ninth threshold, determining that the feature recognition result is a preset result, in which the eighth threshold represents an index threshold of a relative maximum Trms, the ninth threshold represents an index threshold of a relative Doppler, and the preset result indicates that the at least one first parameter of the first beam feature set and the at least one second parameter of the second beam feature set satisfy the preset condition.

In some embodiments, the at least one first parameter includes at least one of the CRS-Trms or the CRS-Doppler, and the at least one second parameter includes at least one of the PDSCH-Trms or the PDSCH-Doppler; or

the at least one first parameter includes at least one of the TRS-Trms or the TRS-Doppler, and the at least one second parameter includes at least one of: the PDSCH-Trms, the PDCCH-Trms, the PDSCH-Doppler, or the PDCCH-Doppler.

In some embodiments, in the case that the current network standard is the first network standard, the feature recognition result may be determined by the ratio between the CRS-Trms and the PDSCH-Trms corresponding to at least one time point and the eighth threshold, as well as the ratio between the PDSCH-Doppler and the CRS-Doppler and the ninth threshold. The eighth threshold may represent, for example, the index threshold of relative Trms, "th-trms-for-BF", the value range of which may be, for example, 2 to 4. The ninth threshold may represent, for example, the index threshold of relative Doppler, "th-doppler-for-BF", the value range of which may be, for example, 0.7 to 1.3.

For example, in an embodiment of the invention, in the case that the current network standard is the first network standard, the ratio between the CRS-Trms and the PDSCH-Trms is greater than th-trms-for-BF and the ratio between the PDSCH-Doppler and the CRS-Doppler is less than th-doppler-for-BF, it may be determined that the feature recognition result is the preset result. For example, it may be determined that the recognition result for the wide and narrow beam effect is that the wide and narrow beam effect occurs. In the case that the ratio between the CRS-Trms and the PDSCH-Trms is not greater than th-trms-for-BF and/or the ratio between the PDSCH-Doppler and the CRS-Doppler is not less than th-doppler-for-BF, it may be determined that the feature recognition result is not the preset result. For example, it may be determined that the recognition result for the wide and narrow beam effect is that the wide and narrow beam effect does not occur.

In some embodiments, in the case that the current network standard is the second network standard, the feature recognition result may be determined by the ratio between the TRS-Trms and the PDSCH-Trms (or the PDCCH-Trms) corresponding to at least one time point and the eighth threshold, as well as the ratio between the PDSCH-Doppler (or the PDCCH-Doppler) and the TRS-Doppler and the ninth threshold. The eighth threshold may represent, for example, the index threshold of relative Trms, "th-trms-for-BF", the value range of which may be, for example, 2 to 4. the ninth threshold may represent, for example, the index threshold of relative Doppler, "th-doppler-for-BF", the value range of which may be, for example, 0.7 to 1.3.

For example, in an embodiment of the invention, in the case that the current network standard is the second network standard, the ratio between the TRS-Trms and the PDSCH-Trms (or the PDCCH-Trms) is greater than th-trms-for-BF and the ratio between the PDSCH-Doppler (or the PDCCH-Doppler) and the TRS-Doppler is less than th-doppler-for-BF, it may be determined that the feature recognition result is the preset result. For example, it may be determined that the recognition result for the wide and narrow beam effect is that the wide and narrow beam effect occurs. In the case that the ratio between the TRS-Trms and the PDSCH-Trms (or the PDCCH-Trms) is not greater than th-trms-for-BF, and/or the ratio between the PDSCH-Doppler (or the PDCCH-Doppler) and the TRS-Doppler is not less than th-doppler-for-BF, it may be determined that the feature recognition result is not the preset result. For example, it may be determined that the recognition result for the wide and narrow beam effect is that the wide and narrow beam effect does not occur.

In some embodiments, in response to the calculation result between the at least one first parameter of the first beam feature set and the at least one second parameter of the second beam feature set and the at least one piece of threshold information, obtaining the feature recognition result includes:

in response to a third difference between any SINR in the at least one second parameter and any SINR in the at least one first parameter being greater than a tenth threshold, and an eighth ratio between any Tmax in the at least one second parameter and any Tmax in the at least one first parameter being greater than an eleventh threshold, determining that the feature recognition result is a preset result, in which the tenth threshold represents an index threshold of a relative SINR, the eleventh threshold represents an index threshold of a relative Tmax, and the preset result indicates that the at least one first parameter of the first beam feature set and the at least one second parameter of the second beam feature set satisfy the preset condition.

In some embodiments, the at least one first parameter includes at least one of: the CRS-SINR, the PSS-SINR, the SSS-SINR or the CRS-Tmax, and the at least one second parameter includes at least one of the PDSCH-SINR or the PDSCH-Tmax; or

the at least one first parameter includes at least one of: the TRS CSI-SINR, the SS-SINR or the TRS-Tmax, and the at least one second parameter includes at least one of: the PDSCH-SINR, the PDCCH-SINR, the PDSCH-Tmax or the PDCCH-Tmax.

In some embodiments, in the case that the current network standard is the first network standard, the feature recognition result may be determined by the difference between the PDSCH-SINR and the CRS-SINR (or the PSS-SINR or the SSS-SINR) and the tenth threshold, as well as the ratio between the CRS-Tmax and the PDSCH-Tmax and the eleventh threshold. The tenth threshold may represent, for example, the index threshold of relative SINR, "th-sinr-for-BF", the value range of which may be, for example, 5 to 10 dB. The eleventh threshold may represent, for example, the index threshold of relative Tmax, "th-tmax-for-BF", the value range of which may be, for example, 1.5 to 3.

For example, in an embodiment of the invention, in the case that the current network standard is the first network standard, the difference between the PDSCH-SINR and the CRS-SINR (or the PSS-SINR or the SSS-SINR) is greater than th-sinr-for-BF and the ratio between the CRS-Tmax and the PDSCH-Tmax is greater than th-tmax-for-BF, it may be determined that the feature recognition result is the preset result. For example, it may be determined that the recognition result for the wide and narrow beam effect is that the wide and narrow beam effect occurs. In the case that the difference between the PDSCH-SINR and the CRS-SINR (or the PSS-SINR or the SSS-SINR) is not greater than th-sinr-for-BF and/or the ratio between the CRS-Tmax and the PDSCH-Tmax is not greater than th-tmax-for-BF, it may be determined that the feature recognition result is not the preset result. For example, it may be determined that the recognition result for the wide and narrow beam effect is that the wide and narrow beam effect does not occur.

In some embodiments, in the case that the current network standard is the second network standard, the feature recognition result may be determined by the difference between the PDSCH-SINR (or the PDCCH-SINR) and the TRS CSI-SINR (or the SS-SINR) and the tenth threshold, as well as the ratio between the TRS-Tmax and the PDSCH-Tmax (or the PDCCH-Tmax) and the eleventh threshold. The tenth threshold may represent, for example, the index threshold of relative SINR, "th-sinr-for-BF", the value range of which may be, for example, 5 to 10 dB. The eleventh threshold may represent, for example, the index threshold of relative Tmax, "th-tmax-for-BF", the value range of which may be, for example, 1.5 to 3.

For example, in an embodiment of the invention, in the case that the current network standard is the second network standard, the difference between the PDSCH-SINR (or the PDCCH-SINR) and the TRS CSI-SINR (or the SS-SINR) is greater than th-sinr-for-BF and the ratio between the TRS-Tmax and the PDSCH-Tmax (or the PDCCH-Tmax) is greater than th-tmax-for-BF, it may be determined that the feature recognition result is the preset result. For example, it may be determined that the recognition result for the wide and narrow beam effect is that the wide and narrow beam effect occurs. In the case that the difference between the PDSCH-SINR (or the PDCCH-SINR) and the TRS CSI-SINR (or the SS-SINR) is not greater than th-sinr-for-BF and/or the ratio between the TRS-Tmax and the PDSCH-Tmax (or the PDCCH-Tmax) is not greater than th-tmax-for-BF, it may be determined that the feature recognition result is not the preset result. For example, it may be determined that the recognition result for the wide and narrow beam effect is that the wide and narrow beam effect does not occur.

In some embodiments, in response to the calculation result between the at least one first parameter of the first beam feature set and the at least one second parameter of the second beam feature set and the at least one piece of threshold information, obtaining the feature recognition result includes:

in response to a fourth difference between any SINR in the at least one second parameter and any SINR in the at least one first parameter being greater than a twelfth threshold, and a ninth ratio between any maximum Trms in the at least one second parameter and any maximum Trms in the at least one first parameter being greater than a thirteenth threshold, determining that the feature recognition result is a preset result, in which the twelfth threshold represents an index threshold of a relative SINR, the thirteenth threshold represents an index threshold of a relative maximum Trms, and the preset result indicates that the at least one first parameter of the first beam feature set and the at least one second parameter of the second beam feature set satisfy the preset condition.

In some embodiments, the at least one first parameter includes at least one of: the CRS-SINR, the PSS-SINR, the SSS-SINR or the CRS-Trms, and the at least one second parameter includes at least one of the PDSCH-SINR or the PDSCH-Tmax; or

the at least one first parameter includes at least one of: the TRS CSI-SINR, the SS-SINR or the TRS-Trms, and the at least one second parameter includes at least one of: the PDSCH-SINR, the PDCCH-SINR, the PDSCH-Trms or the PDCCH-Trms.

In some embodiments, in the case that the current network standard is the first network standard, the feature recognition result may be determined by the difference between the PDSCH-SINR and the CRS-SINR (or the PSS-SINR or the SSS-SINR) and the twelfth threshold, as well as the ratio between the CRS-Trms and the PDSCH-Trms and the thirteenth threshold. The twelfth threshold may represent, for example, the index threshold of relative SINR, "th-sinr-for-BF", the value range of which may be, for example, 5 to 10 dB. The thirteenth threshold may represent, for example, the index threshold of relative Trms, "th-trms-for-BF", the value range of which may be, for example, 2 to 4.

For example, in an embodiment of the invention, in the case that the current network standard is the first network standard, the difference between the PDSCH-SINR and the CRS-SINR (or the PSS-SINR or the SSS-SINR) is greater than th-sinr-for-BF and the ratio between the CRS-Trms and the PDSCH-Trms is greater than th-trms-for-BF, it may be determined that the feature recognition result is the preset result. For example, it may be determined that the recognition result for the wide and narrow beam effect is that the wide and narrow beam effect occurs. In the case that the difference between the PDSCH-SINR and the CRS-SINR (or the PSS-SINR or the SSS-SINR) is not greater than th-sinr-for-BF and/or the ratio between the CRS-Trms and the PDSCH-Trms is not greater than th-trms-for-BF, it may be determined that the feature recognition result is not the preset result. For example, it may be determined that the recognition result for the wide and narrow beam effect is that the wide and narrow beam effect does not occur.

In some embodiments, in the case that the current network standard is the second network standard, the feature recognition result may be determined by the difference between the PDSCH-SINR (or the PDCCH-SINR) and the TRS CSI-SINR (or the SS-SINR) and the twelfth threshold, as well as the ratio between the TRS-Trms and the PDSCH-Trms (or the PDCCH-Trms) and the thirteenth threshold. The twelfth threshold may represent, for example, the index threshold of relative SINR, "th-sinr-for-BF", the value range of which may be, for example, 5 to 10 dB. The thirteenth threshold may represent, for example, the index threshold of relative Trms, "th-trms-for-BF", the value range of which may be, for example, 2 to 4.

For example, in an embodiment of the invention, in the case that the current network standard is the second network standard, the difference between the PDSCH-SINR (or the PDCCH-SINR) and the TRS CSI-SINR (or the SS-SINR) is greater than th-sinr-for-BF and the ratio between the TRS-Trms and the PDSCH-Trms (or the PDCCH-Trms) is greater than th-trms-for-BF, it may be determined that the feature recognition result is the preset result. For example, it may be determined that the recognition result for the wide and narrow beam effect is that the wide and narrow beam effect occurs. In the case that the difference between the PDSCH-SINR (or the PDCCH-SINR) and the TRS CSI-SINR (or the SS-SINR) is not greater than th-sinr-for-BF and/or the ratio between the TRS-Trms and the PDSCH-Trms (or the PDCCH-Trms) is not greater than th-trms-for-BF, it may be determined that the feature recognition result is not the preset result. For example, it may be determined that the recognition result for the wide and narrow beam effect is that the wide and narrow beam effect does not occur.

In some embodiments, in response to the calculation result between the at least one first parameter of the first beam feature set and the at least one second parameter of the second beam feature set and the at least one piece of threshold information, obtaining the feature recognition result includes:

in response to a fifth difference between any SINR in the at least one second parameter and any SINR in the at least one first parameter being greater than a fourteenth threshold, and a tenth ratio between any Tmax in the at least one second parameter and any Tmax in the at least one first parameter being greater than a fifteenth threshold, and an eleventh ratio of any maximum Trms in the at least one second parameter and any maximum Trms in the at least one first parameter being greater than a sixteenth threshold, determining that the feature recognition result is a preset result, in which the fourteenth threshold represents an index threshold of a relative SINR, the fifteenth threshold represents an index threshold of a relative Tmax, the sixteenth threshold represents an index threshold of a relative maximum Trms, and the preset result indicates that the at least one first parameter of the first beam feature set and the at least one second parameter of the second beam feature set satisfy the preset condition.

In some embodiments, the at least one first parameter includes at least one of: the CRS-SINR, the PSS-SINR, the SSS-SINR, the CRS-Tmax or the CRS-Trms, the at least one second parameter includes at least one of: the PDSCH-SINR, the PDSCH-Tmax or the PDSCH-Trms; or

the at least one first parameter includes at least one of: the TRS CSI-SINR, the SS-SINR, the TRS-Tmax or the TRS-Trms, and the at least one second parameter includes at least one of: the PDSCH-SINR, the PDCCH-SINR, the PDSCH-Tmax, the PDCCH-Tmax, the PDSCH-Trms or the PDCCH-Trms.

In some embodiments, in the case that the current network standard is the first network standard, the feature recognition result may be determined by the difference between the PDSCH-SINR and the CRS-SINR (or the PSS-SINR or the SSS-SINR) and the fourteen threshold, as well as the ratio between the CRS-Tmax and the PDSCH-Tmax and the fifteenth threshold, as well as the ratio between the CRS-Trms and the PDSCH-Trms and the sixteenth threshold. The fourteenth threshold may represent, for example, the index threshold of relative SINR, "th-sinr-for-BF", the value range of which may be, for example, 5 to 10 dB. The fifteenth threshold may represent, for example, the index threshold of relative Tmax, "th-tmax-for-BF", the value range of which may be, for example, 1.5 to 3. The sixteenth threshold may represent, for example, the index threshold of relative Trms, "th-trms-for-BF", the value range of which may be, for example, 2 to 4.

For example, in an embodiment of the invention, in the case that the current network standard is the first network standard, the difference between the PDSCH-SINR and the CRS-SINR (or the PSS-SINR or the SSS-SINR) is greater than th-sinr-for-BF, the ratio between the CRS-Tmax and the PDSCH-Tmax is greater than th-tmax-for-BF, and the ratio between the CRS-Trms and the PDSCH-Trms is greater than th-trms-for-BF, it may be determined that the feature recognition result is the preset result. For example, it may be determined that the recognition result for the wide and narrow beam effect is that the wide and narrow beam effect occurs. In the case that difference between the PDSCH-SINR and the CRS-SINR (or the PSS-SINR or the SSS-SINR) is not greater than th-sinr-for-BF, and/or the ratio between the CRS-Tmax and the PDSCH-Tmax is not greater than th-tmax-for-BF, and/or the ratio between the CRS-Trms and the PDSCH-Trms is not greater than th-trms-for-BF, it may be determined that the feature recognition result is not the preset result. For example, it may be determined that the recognition result for the wide and narrow beam effect is that the wide and narrow beam effect does not occur.

In some embodiments, in the case that the current network standard is the second network standard, the recognition result for the wide and narrow beam effect corresponding to at least one time point may be determined by the difference between the PDSCH-SINR (or the PDCCH-SINR) and the TRS CSI-SINR (or the SS-SINR) and the fourteenth threshold, as well as the ratio between the TRS-Tmax and the PDSCH-Tmax (or the PDCCH-Tmax) and the fifteenth threshold, as well as the ratio between the TRS-Trms and the PDSCH-Trms (or the PDCCH-Trms) and the sixteenth threshold. The fourteenth threshold may represent, for example, the index threshold of relative SINR, "th-sinr-for-BF", the value range of which may be, for example, 5 to 10 dB. The fifteenth threshold may represent, for example, the index threshold of relative Tmax, "th-tmax-for-BF", the value range of which may be, for example, 1.5 to 3. The sixteenth threshold may represent, for example, the index threshold of relative Trms, "th-trms-for-BF", the value range of which may be, for example, 2 to 4.

For example, in an embodiment of the invention, in the case that the difference between the PDSCH-SINR (or the PDCCH-SINR) and the TRS CSI-SINR (or the SS-SINR) is greater than th-sinr-for-BF, the ratio between the TRS-Tmax and the PDSCH-Tmax (or the PDCCH-Tmax) is greater than th-tmax-for-BF and the ratio between the TRS-Trms and the PDSCH-Trms (or the PDCCH-Trms) is greater than th-trms-for-BF, it may be determined that the feature recognition result is the preset result. For example, it may be determined that the recognition result for the wide and narrow beam effect is that the wide and narrow beam effect occurs. In the case that the difference between the PDSCH-SINR (or the PDCCH-SINR) and the TRS CSI-SINR (or the SS-SINR) is not greater than th-sinr-for-BF, and/or the ratio between the TRS-Tmax and the PDSCH-Tmax (or the PDCCH-Tmax) is not greater than th-tmax-for-BF, and/or the ratio between the TRS-Trms and the PDSCH-Trms (or the PDCCH-Trms) is not greater than th-trms-for-BF, it may be determined that the feature recognition result is not the preset result. For example, it may be determined that the recognition result for the wide and narrow beam effect is that the wide and narrow beam effect does not occur.

In the embodiments of the invention, a plurality of solutions for determining the feature recognition result in response to the calculation result between the at least one first parameter of the first beam feature set and the at least one second parameter of the second beam feature set and the at least one piece of threshold information may be combined with each other to determine the feature recognition result, which may improve the accuracy of determining the feature recognition result, reduce the situation where the accuracy of obtaining the CSI required for channel estimation is poor, improve the reception state of the communication device, and improve the communication quality of the communication device.

At S25, the at least one first parameter of the first beam feature set and the at least one second parameter of the second beam feature set are input into a preset neural network model for beam sensing, and a feature recognition result output by the preset neural network model for beam sensing is obtained, in which the feature recognition result indicates whether the at least one first parameter of the first beam feature set and the at least one second parameter of the second beam feature set satisfy the preset condition.

The specific process is as described above, which will not be repeated here.

In an embodiment of the invention, there is no limitation on a type of the preset neural network model for beam sensing, for example, any model that may determine the feature recognition result according to the at least one first parameter of the first beam feature set and the at least one second parameter of the second beam feature set.

According to some embodiments, inputting the at least one first parameter of the first beam feature set and the at least one second parameter of the second beam feature set into the preset neural network model for beam sensing, and obtaining the feature recognition result output by the preset neural network model for beam sensing, includes:

inputting the at least one first parameter of the first beam feature set and the at least one second parameter of the second beam feature set into the preset neural network model for beam sensing, and obtaining a vector corresponding to the at least one first parameter and the at least one second parameter; and
obtaining the feature recognition result output by the preset neural network model for beam sensing, by performing a recognition processing on the vector with an activation function of the preset neural network model for beam sensing.

In some embodiments, when the current network standard is the first network standard, the CRS-SINR, the CRS-Tmax, the CRS-Trms, the CRS-Doppler, the PDSCH-SINR, the PDSCH-Tmax, the PDSCH-Trms, and the PDSCH-Doppler may be input into the preset neural network model for beam sensing. The neural network model for beam sensing may be controlled to determine whether the wide and narrow beam effect occurs at a current time point through reasoning.

In some embodiments, when the current network standard is the second network standard, the SS-SINR, the TRSCSI-SINR, the TRS-Tmax, the TRS-Trms, the TRS-Doppler, the PDCCH-SINR, the PDSCH-Tmax (PDCCH-Tmax), the PDSCH-Trms (PDCCH-Trms), and the PDSCH-Doppler (PDCCH-Doppler) may be input into the neural network model for beam sensing. The neural network model for beam sensing may be controlled to determine whether the wide and narrow beam effect occurs at the current time point through reasoning.

In response to some embodiments, the recognition result for the wide-narrow beam effect may be, for example, an output period Tbf, the value range of which may be, for example, 0.5 to 5 ms.

In some embodiments, an input feature of the preset neural network model for beam sensing may be, for example, $x[t] = [x_1[t], \cdots, x_{N_{in}}[t]]^T$, where x[t] may be, for example, a vector with the dimension of $N_{in} \times 1$, $N_{in}$ takes a value corresponding to the 4G network state or a value corresponding to the 5G network state.

When the current network standard is the first network standard, an input of the preset neural network model for beam sensing is expressed by:

x[t] = [CRS-SINR[t], CRS-Tmax[t], CRS-Trms[t], CRS-Doppler[t], PDSCH-SINR[t], PDSCH-Tmax[t], PDSCH-Trms[t], PDSCH-Doppler[t]]$^T$, which is a vector of 8×1 (where the upper right subscript T at the end of the formula represents transposition, that is, the row vector of 1×8 is rearranged in sequence to the column vector of 8×1). Each element of the vector represents the result obtained by a t$^{th}$ time of sampling, and x[t] represents a signal feature obtained by the t$^{th}$ time of sampling.

When the current network standard is the second network standard, an input of the preset neural network model for beam sensing is expressed by:

x[t] = [SS-SINR[t], TRS CSI-SINR[t], TRS-Tmax[t], TRS-Trms[t], TRS-Doppler[t], PDSCH-SINR[t](or the PDCCH-SINR), PDSCH-Tmax[t] (or the PDCCH-Tmax), PDSCH-Trms[t] (or the PDCCH-Trms), PDSCH-Doppler[t] (or the PDCCH-Doppler)]$^T$, which is a vector of 9×1. Each element of the vector represents the result obtained by the t$^{th}$ time of sampling, and x[t] represents a signal feature obtained by the t$^{th}$ time of sampling.

In some embodiments, in the neural network model for beam sensing based on a fully connected neural network, only a signal feature for a current time of sampling is used by the signal feature obtained by each time of sampling, and the model with the fully connected neural network is called once to obtain an inference output value corresponding to the current time of sampling. Therefore, in the embodiments of the invention, the input vector with the dimension of $N_{in} \times 1$ is represented by $x = [x_1, \cdots, x_{N_{in}}]^T$, where the identifier [t] representing a sampling moment may be omitted.

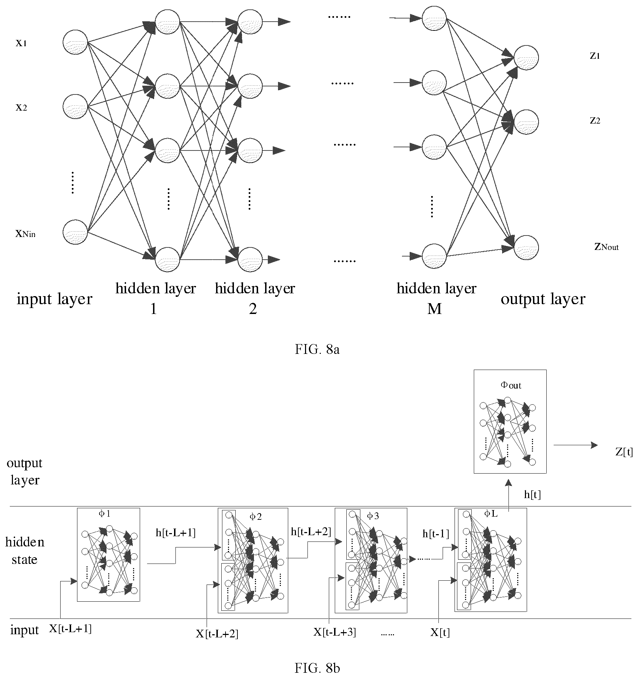

In some embodiments, FIG. 8a is an example diagram illustrating a neural network model according to an embodiment. As illustrated in FIG. 8a, the preset neural network model for beam sensing may be, for example, a fully connected network model. The fully connected network model includes 1 input layer, M hidden layers (M ≥ 1) and 1 output layer. A number of nodes corresponding to the input layer is $N_{in}$. A number of nodes corresponding to the M hidden layers is $N_1^{hid}, \cdots, N_M^{hid}$ respectively. A number of nodes corresponding to the output layer is $N_{out}$. In the present invention, the number of hidden layers ranges from 1 to 16, and the number of nodes $N_1^{hid}, \cdots, N_M^{hid}$ in each hidden layer ranges from 1 to 1024.

Each node in the hidden layer 1 is defined as: $y_1^{hid} = \left[ y_{1,1}^{hid}, \cdots, y_{1,N_1^{hid}}^{hid} \right]^T$, the calculation formula of which is

$y_1^{hid} = f_1(W_1 x + b_1)$,

where $W_1$ is a matrix with the dimension of $N_1^{hid} \times N_{in}$ and $b_1$ is a vector with the dimension of $N_1^{hid} \times 1$, both of which are preset fixed real coefficients obtained by a pre-training process of the neural network; $f_1(\cdot)$ indicates that each element of the input vector is subjected to an activation function and the definition of the activation function is the same as that of a general neural network, which will not be repeated here. Taking the activation function "ReLU" as an example, it is defined as f(x) = max(x, 0), a calculation formula of the hidden layer 1 is $y_1^{hid} = max(W_1 x + b_1, 0)$, i.e., each element of

the vector $W_1 x + b_1$ with the dimension of $N_1^{hid} \times 1$ is limited with 0 to obtain the result.

According to some embodiments, each node in the hidden layer k is defined as $y_k^{hid} = \left[ y_{k,1}^{hid}, \cdots, y_{k,N_k^{hid}}^{hid} \right]^T (k = 2, \cdots, M)$, a calculation formula of which is $y_k^{hid} = f_k(W_k y_{k-1}^{hid} + b_k)$,

where $W_k$ is a matrix with the dimension of $N_k^{hid} \times N_{k-1}^{hid}$, $b_k$ is a vector with the dimension of $N_k^{hid} \times 1$, and $f_k(\cdot)$

represents the activation function applicable to the $k^{th}$ layer. Similarly, $W_k$ and $b_k$ are obtained in advance by the pre-training process, and the activation function is defined as above.

According to some embodiments, each node in the output layer is defined as: $z = [z_1, \cdots, z_{N_{out}}]$, a calculation formula of which is $z = f_{out}\left(W_{out}y_M^{hid} + b_{out}\right)$,

where $W_{out}$ is a matrix with the dimension of $N_{out} \times N_M^{hid}$, $b_{out}$ is a vector with the dimension of $N_{out} \times 1$, and $f_{out}(\cdot)$ represents the activation function applicable to the output layer. Similarly, $W_{out}$ and $b_{out}$ are obtained in advance by the pre-training process, and the activation function is defined as above.

According to some embodiments, a default value of $N_{out}$ is 1, and the following decision is made according to each node in the output layer: if $z_1 > 0$, the neural network for beam sensing judges that the wide and narrow beam effect occurs at a current moment; if $z_1 \leq 0$, the neural network for beam sensing judges that the wide and narrow beam effect does not occur at the current moment.

In an embodiment of the invention, a number of input nodes is $N_{in} = 8$, a number of output nodes is $N_{out} = 1$, a number of hidden layers is M = 2, and a number of nodes in each hidden layer is $\left[N_1^{hid}, N_2^{hid}\right] = [6,4]$;

the activation function of each layer is Sigmoid;

$W_1$ is a matrix with the dimension of 6×8:

```
[0.47425    -0.01978   -1.9843    0.36086    -1.595     -0.037328   0.43774    0.33768;
 0.59427    -1.0934    0.40933    0.34503    0.24259    -0.43542    1.7432     -1.0481;
 -0.55435   0.074074   0.72131    0.71858    0.9091     0.95278     -0.58335   0.26392;
 -1.0326    -0.59564   0.73049    0.42118    0.085769   0.71246     0.93609    -0.18115;
 2.1112     -0.62527   0.57654    1.0897     0.78288    0.86894     0.42387    -0.78136;
 1.7352     0.90966    -1.0508    -0.86148   1.5539     -0.56438    -0.18695   2.4039]
```

$b_1$ is a vector with the dimension of 6×1:

```
[0.56686;
 -0.47827;
 -0.91867;
 1.8984;
 0.61859;
 0.030253]
```

$W_2$ is a matrix with the dimension of 4×6:

```
[-0.47758   -0.49359   0.052784   0.23745    1.3879     -0.21832;
 1.3286     0.23366    -0.085707  0.50344    2.4921     -0.14543;
 0.63552    -2.0057    0.28092    -0.30701   -0.58309    1.2332;
 0.83319    -0.23135   -0.23071   -2.5688    0.9832     0.075375]
```

$b_2$ is a vector with the dimension of 4×1:

```
[-0.32724;
 1.7266;
 0.15219;
 -1.319]
```

$W_{out}$ is a vector with the dimension of 1×4: [-0.036337 -1.234 -1.2407 -1.4056]
$b_{out}$ is a scalar with the dimension of 1×1: [-0.3172].

In an embodiment of the invention, the number of input nodes is $N_{in} = 9$, the number of output nodes is $N_{out} = 1$, the number of hidden layers is M = 3, and the number of nodes in each hidden layer is $\left[N_1^{hid}, N_2^{hid}, N_3^{hid}\right] = [4,3,2]$;

the activation function of each hidden layer is ReLU, and the activation function of the output layer is Softmax;

$W_1$ is a matrix with the dimension of 4×9:

[0.59364   -0.20928   -1.1535   -1.2801   0.60269   -0.058899   -1.8738   -0.73964   -0.91751;
1.436   0.69515   0.61159   -1.0286   -0.79876   -1.733   0.045742   1.3826   -0.47894;
1.0405   1.1476   -0.5495   0.051149   1.3497   -1.0605   0.44058   0.024944   0.90165;
-0.20849   0.34914   0.39515   -2.0721   0.12201   0.080399   -0.40045   -0.32359   0.46772]

$b_1$ is a vector with the dimension of $4\times1$:

[-0.52743;
-0.72111;
-0.96918;
1.2817]

$W_2$ is a matrix with the dimension of $3\times4$:

[1.371   1.9237   -0.87408   1.2361;
0.20461   -0.12354   -2.0295   1.1392;
-0.97443   -0.17133   0.61787   -1.6262]

$b_2$ is a vector with the dimension of $3\times1$:

[0.68037;
0.043459;
0.54384]

$W_3$ is a matrix with the dimension of $2\times3$:

[0.48873 -0.74289 1.1725;
1.49 1.5016-1.5343]

$b_3$ is a vector with the dimension of $2\times1$:

[1.203;
-0.50165]

$W_{out}$ is a vector with the dimension of $1\times2$: [-1.6399 0.18647]
$b_{out}$ is a scalar with the dimension of $1\times 1$: [0.30811]

In an embodiment of the invention, the neural network model for beam sensing may be trained for example, where training data and test data may come from historical communication data, or simulation data, which is not limited in the embodiments of the invention. In the actual communication process or data simulation, a signal feature related to the input of the neural network model for beam sensing may be recorded, and a label (i.e., an expected output value) of the signal feature may be marked according to a current actual communication performance or a simulation performance. A set of input data and a corresponding output label may be obtained for each time of sampling. Taking the second network standard as an example, assuming that the input obtained by the $t^{th}$ time of sampling is x[t] = [SS-SINR[t], TRS CSI-SINR[t], TRS-Tmax[t], TRS-Trms[t], TRS-Doppler[t], PDSCH-SINR[t] (or the PDCCH-SINR), PDSCH-Tmax[t] (or the PDCCH-Tmax), PDSCH-Trms[t] (or the PDCCH-Trms), PDSCH-Doppler[t] (or the PDCCH-Doppler)]$^T$ , and the output value obtained by marking is z[t], then {x[t], z[t]} constitutes a piece of training data or a piece of test data for the neural network model for beam sensing. After a plurality of times of sampling, a plurality of pieces of data are obtained, which may be divided into a training data set and a test data set. The training data set is used for training a neural network parameter, that is, to obtain each preset parameter matrix/vector/scalar as mentioned above. The test data set is used to verify a performance of a training result.

In some embodiments, FIG. 8b is an example diagram illustrating a neural network model according to an embodiment. As illustrated in FIG. 8b, the preset neural network model for beam sensing may be, for example, a recurrent neural network model. In the model for beam sensing based on the recurrent neural network, the signal feature obtained by each time of sampling is based on signal features for L times of sampling before the current time of sampling, and the recurrent neural network model is called once to obtain an inference output value corresponding to the current time of sampling. Therefore, in the recurrent neural network, the input data is represented by [x[t - L + 1], $\cdots$ ,x[t - 1],x[t]].

According to some embodiments, the network model includes L hidden states {h[t - L + 1], $\cdots$ , h[t]}, each of which is a vector with the dimension of $N_1^{hid} \times 1, \cdots, N_L^{hid} \times 1$ , respectively, and L fully connected layers {$\phi_1$, $\cdots$ , $\phi_L$} with activation functions and 1 output layer $\phi_{out}$. In the present invention, the number of hidden states ranges from 1 to 16, and the dimension $N_1^{hid}, \cdots, N_L^{hid}$ of each hidden state ranges from 1 to 1024.

According to some embodiments, a calculation formula of the first hidden state h[t - L + 1] is:

$$h[t - L + 1] = f_1\big(W_{hx,1}x[t - L + 1] + b_1\big) \qquad (1)$$

where $W_{hx,1}$ is a matrix with the dimension of $N_1^{hid} \times N_{in}$, $b_1$ is a vector with the dimension of $N_1^{hid} \times 1$, both of which are preset fixed real coefficients and obtained by the pre-training process of the neural network; $f_1(\cdot)$ indicates that each element of the input vector is subjected to an activation function, and the definition of the activation function is the same as that of a general neural network. Taking the activation function "Sigmoid" as an example, it is defined as $f(x) = (1 + e^{-x})^{-1}$, then a way of calculating the hidden state 1 is: first calculating an intermediate variable $a = W_{hx,1}x[t - L + 1] + b_1$, which is a vector with the dimension of $N_1^{hid} \times 1$, and calculating h[t - L + 1], whose $i^{th}$ element is $(1 + e^{-a[i]})^{-1}$, where a[i] is calculated from the $i^{th}$ element of the intermediate variable a.

The calculation formula (2) of the $k^{th}$ hidden state (k = 2, $\cdots$ , L) is:

$$h[t - L + k] = f_k\big(W_{hx,k}x[t - L + k] + W_{hh,k}h[t - L + k - 1] + b_k\big) \qquad (2)$$

$W_{hx,k}$ is a matrix with the dimension of $N_k^{hid} \times N_{in}$, $W_{hh,k}$ is a matrix with the dimension of $N_k^{hid} \times N_{k-1}^{hid}$, and $b_k$ is a vector with the dimension of $N_k^{hid} \times 1$, the three of which are preset fixed real coefficients obtained by the pre-training process of the neural network; h[t - L + k - 1] is the $(k - 1)^{th}$ hidden state (a vector with the dimension of $N_{k-1}^{hid} \times 1$); and $f_k(\cdot)$ represents the activation function applicable to the $k^{th}$ layer.

According to some embodiments, each node of the output layer is defined as: $z = [z_1, \cdots , z_{N_{out}}]$, a calculation formula (3) of which is:

$$z = f_{out}(W_{out}h[t] + b_{out}) \qquad (3)$$

where $W_{out}$ is a matrix with the dimension of $N_{out} \times N_L^{hid}$, $b_{out}$ is a vector with the dimension of $N_{out} \times 1$, both of which are preset fixed real coefficients and obtained by the pre-training process of the neural network; $f_{out}(\cdot)$ represents the activation function applicable to the output layer, and the activation function is defined as above.

According to some embodiments, a default value of $N_{out}$ is 1, and the following decision is made according to each node in the output layer: if $z_1 > 0$, the neural network for beam sensing judges that the wide and narrow beam effect occurs at a current moment; if $z_1 \leq 0$, the neural network for beam sensing judges that the wide and narrow beam effect does not occur at the current moment.

According to some embodiments, the number of input nodes is $N_{in}$ = 8, the number of output nodes is $N_{out}$ = 1, a number of hidden states is L = 2, and the number of nodes in each hidden layer is $N_1^{hid} = 2$, $N_2^{hid} = 3$.
the activation function of each layer is Sigmoid;
$W_{hx,1}$ is a matrix with the dimension of 2×8:

[0.95805   0.32599   0.50035   0.52071   -1.1799   0.16249   0.51442   0.46264;
-0.76883   0.90085   1.8183   -1.201   -0.76587   -1.0905   -0.14306   -0.14932]

$b_1$ is a vector with the dimension of 2×1:

[0.13263;
2.5974]

$W_{hx,2}$ is a matrix with the dimension of 3×8:

[1.2837    0.30872    0.47553    0.029408    0.15568    0.21218    -1.8522    -0.6046;
1.8945    -0.53089    0.79864    -0.23068    2.5903    0.86492    -0.21696    -0.98725;
-2.5078    -1.0806    0.1192    -0.96649    0.33618    -0.96293    -0.37006    0.14036]

$b_2$ is a vector with the dimension of $3\times1$:

[-0.41078;
-0.097416;
-0.15023]

$W_{hh,2}$ is a matrix with the dimension of $3\times2$:

[-0.27852 0.91732;
0.12799 0.76073;
-0.075746-0.99056]

$W_{out}$ is a vector with the dimension of $1\times3$: [-0.45479 -0.48775-0.67786]
$b_{out}$ is a scalar with the dimension of $1\times1$: [1.2692]

According to some embodiments, the number of input nodes is $N_{in} = 9$, the number of output nodes is $N_{out} = 1$, the number of hidden states is L = 3, and the number of nodes in each hidden layer is $N_1^{hid} = 3$, $N_2^{hid} = 2$, $N_3^{hid} = 2$.

The activation functions of the first, second, and third hidden layers are Sigmoid, ReLU, and Softplus respectively, and the activation function of the output layer is Softmax;

$W_{hx,1}$ is a matrix with the dimension of $3\times9$:

[0.46432    0.28459    -0.37168    -0.39109    -0.11489    -1.2409    0.43961 1.5053    0.72785;
0.24993    -1.0127    -0.86236    -0.76395    -0.30244    -0.073267    -1.3072 -0.58309    0.19708;
-0.89957    1.006    1.1514    1.5531    2.0053    0.040107    -0.38166 -1.7546    0.48341]

$b_1$ is a vector with the dimension of $3\times1$:

[1.4983;
0.93334;
-0.84369]

$W_{hx,2}$ is a matrix with the dimension of $2\times9$:

[1.1493    -1.2864    0.27587    0.8826    -1.0677    0.42064    -0.15513    -0.72571    -0.35817;
0.63565    1.2868    0.91628    1.2741    2.4115    0.39103    -0.39591    0.12894    -0.27977]

$b_2$ is a vector with the dimension of $2\times1$:

[0.98282;
-0.85696]

$W_{hh,2}$ is a matrix with the dimension of $2\times3$:

[-0.113 -0.92787 0.38149;
1.1621 -0.32756 -0.701208]

$W_{hx,3}$ is a matrix with the dimension of 2x9:

[-1.1035    -1.056    0.32574    0.60097    0.9682    2.3773    -0.10138    -1.6612    -0.54795;
-1.1946    0.76788    -0.65609    -1.0127    -0.92869    0.51302    0.40007    -1.6123    -0.98417]

$b_3$ is a vector with the dimension of $2\times1$:

    [-1.2314;
    0.49445]

$W_{hh,3}$ is a matrix with the dimension of $2\times2$:

    [-1.6949 0.95131;
    -0.37369-1.6743]

$W_{out}$ is a vector with the dimension of $1\times2$: [0.88022 0.77134]
$b_{out}$ is a scalar with the dimension of $1\times1$: [-1.4642].

In an embodiment of the invention, training data or test data of the recurrent neural network may come from actual historical communication data, or simulation data. In the actual communication process or data simulation process, a signal feature related to the input of the neural network may be recorded, and a label (i.e., an expected output value) of the signal feature may be marked according to a current actual communication performance or a simulation performance. A set of input data and a corresponding output label may be obtained for each time of sampling. Taking the second network standard, i.e., the 5G network state, as an example, assuming that the input obtained by the $t^{th}$ time of sampling is x[t] = [SS-SINR[t], TRSCSI-SINR[t], TRS-Tmax[t], TRS-Trms[t], TRS-Doppler[t], PDSCH-SINR[t] (or the PDCCH-SINR), PDSCH-Tmax[t] (or the PDCCH-Tmax), PDSCH-Trms[t] (or the PDCCH-Trms), PDSCH-Doppler[t] (or the PDCCH-Doppler)]$^T$, the output value obtained by marking is z[t]. The difference from the fully connected neural network model is that each piece of data in the recurrent neural network contains not only the input and output at the current moment, but also the inputs at L-1 historical moments. That is, {x[t- L + 1], $\cdots$ ,x[t], z[t]} constitutes a piece of training data or a piece of test data of the neural network. After a plurality of times of sampling, a plurality of pieces of data are obtained, which may be divided into a training data set and a test data set. The training data set is used for training a recurrent neural network parameter, that is, to obtain each preset parameter matrix/vector/scalar of the recurrent neural network model. The test data set is used to verify a performance of a training result.

In a given neural network model, a training goal of the neural network model is to minimize an error between a predicted output value and a true output value label. In order to quantify a gap between a predicted value and a true value, a loss function may be defined. Taking the loss function $\mathcal{L}_2$ as an example, the error is defined as $\|z - \hat{z}\|_2^2$ , where z is the true output value label and 2 is the predicted output value, and $\|\cdot\|_2^2$ represents a sum of squares of all elements of the matrix or vector

According to the above training data and loss function, initial values of all parameters to be solved of the neural network are first set, which include $W_{hx,1}, \dots, W_{hx,L}, W_{out}, b_1, ..., b_L, b_{out}, W_{hh,2}, ..., W_{hh,L}$. Then, a total error is calculated for the training samples, that is, a sum of loss functions of all training set samples. Then, a back propagation process of the recurrent neural network model is used to continuously correct the above parameters to be solved in the iterative process until the sum of the loss functions of all training set samples meets the requirements.

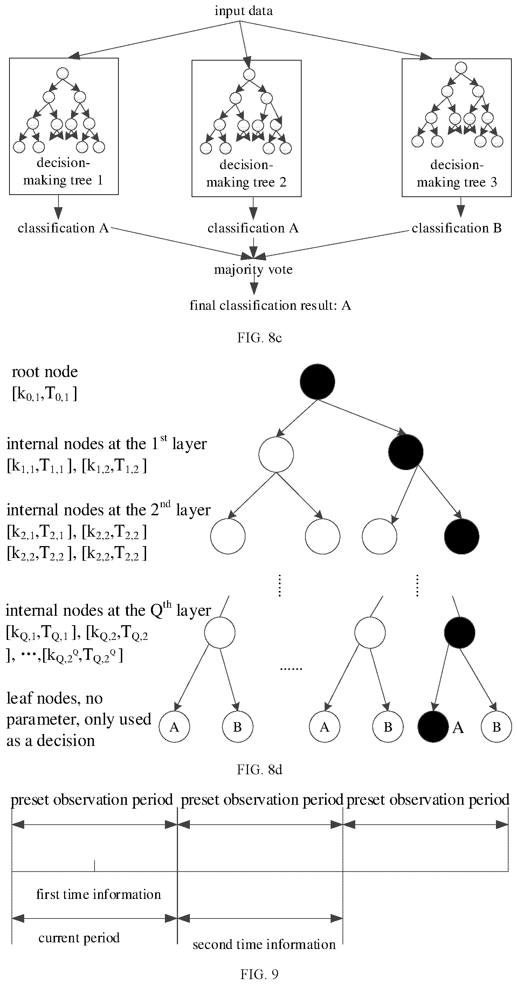

Optionally, FIG. 8c is an example diagram illustrating a neural network model according to an embodiment. As illustrated in FIG. 8c, the preset neural network model for beam sensing in this embodiment of the invention is a random forest model. In a model for beam sensing based on the random forest, only a signal feature for a current time of sampling is used by the signal feature obtained by each time of sampling, and the random forest model is called once to obtain an inference output value corresponding to the current time of sampling. Therefore, in this section, the input vector with the dimension of $N_{in} \times 1$ is represented by x = [x_1, $\cdots$, x_{N_{in}}]$^T$, where the identifier [t] representing a sampling moment is omitted.

According to some embodiments, the network model includes decision trees, and when P=1, the random forest model degenerates into a decision tree. Each decision tree gives respective classification discrimination result according to input data. For example, A in FIG. 8c represents that the wide and narrow beam effect occurs at the current moment, and B in FIG. 8c represents that the wide and narrow beam effect does not occur at the current moment. Voting may be performed according to classification results of the plurality of decision trees, and a classification result with more votes is a final classification result.

According to some embodiments, taking a binary tree illustrated in FIG. 8c as an example, the implementation of a single decision tree may be, for example, as illustrated in FIG. 8d, where the bottom layer of the decision tree is a leaf node, each leaf node corresponds to a classification discrimination result. If the decision process falls into a certain leaf node, the final classification discrimination result of the decision tree may be determined. Except for leaf nodes at the bottom layer, each node at remaining layers of the decision tree takes a certain feature of the input data, so as to determine whether it satisfies a specific condition and thus determine to which child node the current node will proceed.

Assuming that a sequence relationship is used as a decision condition of each node, the decision condition of each non-leaf node may be expressed as [k, T], where k represents a feature number and T is a sequence relationship threshold, which means that for the input data $x = [x_1, \cdots, x_{N_{in}}]^T$, if $x_k < T$, the next step proceeds to a left branch, otherwise proceeds to a right branch; and so on.

Specifically, for the decision tree having internal nodes at Q layers illustrated in FIG. 8d, Q+1 decisions will be made based on the input data $x = [x_1, \cdots, x_{N_{in}}]^T$ to obtain a final decision result.

In the 1st decision, a root node has preset parameters $[k_{0,1}, T_{0,1}]$ obtained by pre-training, where the 1st parameter is a sequence number in the range of $1,..., N_{in}$, the 2nd parameter is a real number threshold. It is determined whether $x_{k_{0,1}} < T_{0,1}$ is true, if yes, it proceeds to the left branch connected to the root node, and a decision result is marked as $c_1 = 0$, and if no, it proceeds to the right branch connected to the root node, and a decision result is marked as $c_1 = 1$.

In the 2nd decision, internal nodes corresponding to the 1st layer have preset parameters $[k_{1,1}, T_{1,1}]$, $[k_{1,2}, T_{1,2}]$ obtained by pre-training, where the 1st parameter in each group of parameters is a sequence number in the range of $1,...,$ $N_{in}$, and the 2nd parameter is a real number threshold. According to the 1st decision result $c_1$, parameters $[k_{1,c_1+1}, T_{1,c_1+1}]$ corresponding to an associated node in the 2nd decision are determined. It is determined whether $x_{k_{1,c_1+1}} < T_{1,c_1+1}$ is true, if yes, it proceeds to the left branch connected to each internal node, and the decision result is marked as $c_2 = 0$, and if no, it proceeds to the right branch connected to each internal node, and the decision result is marked as $c_2 = 1$.

In the $k^{th}$ decision ($3 \leq k \leq Q+1$), internal nodes corresponding to the $(k - 1)^{th}$ layer have preset parameters $[k_{k-1,1}, T_{k-1,1}]$, $[k_{k-1,2}, T_{k-1,2}]$, $\cdots$, $[k_{k-1,2^{k-1}}, T_{k-1,2^{k-1}}]$ obtained by pre-training, where the 1st parameter in each group of parameters is a sequence number in the range of $1,..., N_{in}$, and the second parameter is a real number threshold. According to the 1st decision result $c_1$, , the $2^{nd}$ decision result..., the $(k - 1)^{th}$ decision result $c_{k-1}$, parameters

$$\left[k_{k-1,\sum_{i=1}^{k-1} 2^{k-1-i}c_i+1}, T_{k-1,\sum_{i=1}^{k-1} 2^{k-1-i}c_i+1}\right]$$

corresponding to an associated node in the $k^{th}$ decision are determined. It is determined whether $x_{k_{k-1,\sum_{i=1}^{k-1} 2^{k-1-i}c_i+1}} < T_{k-1,\sum_{i=1}^{k-1} 2^{k-1-i}c_i+1}$ is true, if yes, it proceeds to the left branch connected to each internal node, and the final decision result is marked as A, and if no, it proceeds to the right branch connected to each internal node, and the final decision result is marked as B.

According to some embodiments, a number of input nodes is $N_{in} = 8$, a number of decision trees is $P = 3$, and a number of internal node layers is $Q = 1$. The parameters corresponding to the random forest model are:

$$\text{Decision Tree 1: } [k_{0,1}, T_{0,1}] = [1,2.5], \ [k_{1,1}, T_{1,1}] = [2,1], \ [k_{1,2}, T_{1,2}] = [4,10];$$

$$\text{Decision tree 2: } [k_{0,1}, T_{0,1}] = [3,1], \ [k_{1,1}, T_{1,1}] = [1,8.5], \ [k_{1,2}, T_{1,2}] = [6,5];$$

$$\text{Decision Tree 3: } [k_{0,1}, T_{0,1}] = [5,4.5], \ [k_{1,1}, T_{1,1}] = [8,7], \ [k_{1,2}, T_{1,2}] = [7,3]$$

According to some embodiments, the number of input nodes is $N_{in} = 9$, the number of decision trees is $P = 1$, and the number of internal node layers is $Q = 2$. The parameters corresponding to the random forest model are:

Decision Tree 1: $[k_{0,1}, T_{0,1}] = [2,3.5]$ , $[k_{1,1}, T_{1,1}] = [3,2]$ , $[k_{1,2}, T_{1,2}] = [5,7]$ , $[k_{2,1}, T_{2,1}] = [9,2]$ , $[k_{2,2}, T_{2,2}] = [8,2]$, $[k_{2,2}, T_{2,2}] = [4,2.5]$, $[k_{2,2}, T_{2,2}] = [5,3.5]$.

According to some embodiments, training data or test data of the random forest may come from, for example, actual historical communication data or numerical simulation data. In the actual communication or numerical simulation process, a signal feature related to the input of the neural network may be recorded, and a label (i.e., an expected output value) of the signal feature may be marked according to a current actual communication performance or a simulation performance. A set of input data and a corresponding output label may be obtained for each time of sampling. Taking the second network standard, i.e., the 5G network state, as an example, assuming that the input obtained by the $t^{th}$ time of sampling is x[t] = [SS-SINR[t], TRSCSI-SINR[t], TRS-Tmax[t], TRS-Trms[t], TRS-Doppler[t], PDSCH-SINR[t] (or the PDCCH-SINR), PDSCH-Tmax[t] (or the PDCCH-Tmax), PDSCH-Trms[t] (or the PDCCH-Trms), PDSCH-Doppler[t] (or the PDCCH-Doppler)]$^T$, the output value obtained by marking is z[t]. Then {x[t], z[t]} constitutes a piece of training data or a piece of test data of the random forest. After a plurality of times of sampling, a plurality of pieces of data are obtained, which may be divided into a training data set and a test data set. The training data set is used for training a random forest parameter, that is, to obtain each preset parameter matrix/vector/scalar as mentioned in this section. The test data set is used to verify a performance of a training result.

Based on the above training data, each decision tree in the random forest may be constructed, for example, in the following way, where different decision trees are constructed independently and in the same way.

Some samples are extracted with replacement from a total training set, and a decision tree is trained with the extracted samples.

Each sample has $N_{in}$ input attributes, a specific strategy is used at each node of the decision tree that needs to be split to select one attribute as a splitting attribute of the node and a corresponding splitting threshold is determined, where the attribute and threshold determination strategy is not limited (e.g., an information gain may be used).

During the process of constructing a decision tree, each node is split according to the previous step until a maximum depth is reached or it may no longer be split.

In order to ensure the consistency of the process (that is, after a given maximum depth, a total number of decisions in any case is the same), a branch with a depth less than the maximum depth (which is terminated early because further splitting of the samples is not supported) is extended to the maximum depth. In the extending way, for a leaf node having a depth less than the maximum depth, it is continued to expand the branches, and decision parameters of each decision node are set to $[1, T_{max} + 1]$, where $T_{max}$ is used to guarantee a value greater than x, [t] in any scene, for example, taking infinity. At the same time, final leaf node decision results corresponding to these branches are decision results of the leaf nodes having a depth less than the maximum depth.

At S26, in response to the at least one first parameter of the first beam feature set and the at least one second parameter of the second beam feature set satisfying a preset condition, the first beam feature set or the second beam feature set is selected as an acquisition source of CSI.

The specific process is as described above and will not be repeated here.

In response to some embodiments, for a fixed continuous observation period, first time information is any moment for a current period in preset continuous observation periods, and second time information is a next preset period adjacent to the current period. At this time, an example schematic diagram of the first time information and the second time information may be illustrated in FIG. 9, for example.

In response to some embodiments, selecting the first beam feature set or the second beam feature set as the acquisition source of CSI includes:

in response to feature recognition results corresponding to first time information satisfying a first result requirement, and an RRC connection of a communication device being not reconfigured or released, determining that an acquisition source corresponding to the CSI within second time information is an acquisition source of a dynamic beam feature, in which the first time information is any moment for a current period in preset continuous observation periods, and the second time information is a next preset period adjacent to the current period, and the first result requirement includes a result requirement that all the feature recognition results corresponding to the first time information are the preset results, or a result requirement that a first number of preset results in the feature recognition results corresponding to the first time information satisfy a number requirement.

According to some embodiments, selecting the first beam feature set or the second beam feature set as the acquisition source of CSI includes:

in response to the feature recognition results corresponding to the first time information are all the preset result and the RRC connection of the communication device being not reconfigured or released, determining that the acquisition source corresponding to the CSI within the second time information is the acquisition source of the dynamic beam feature.

According to some embodiments, the first time information is any moment for the current period in the preset continuous observation periods, and selecting the first beam feature set or the second beam feature set as the acquisition source of CSI includes:

in the case that a first number of preset results in the feature recognition results corresponding to the first time information meets the number requirement and the RRC connection of the communication device has not been reconfigured or released, determining that the acquisition source corresponding to the CSI within the second time information is the acquisition source of the dynamic beam feature.

The first number may also be, for example, a ratio, a percentage, a multiple, or the like of the first number etc., which is not limited in the embodiments of the invention.

According to some embodiments, selecting the first beam feature set or the second beam feature set as the acquisition source of CSI includes:

in response to feature recognition results corresponding to first time information satisfying a second result requirement, determining that an acquisition source corresponding to the CSI within second time information is an acquisition source of a static beam feature, in which the first time information is any moment for a current period in preset continuous observation periods, and the second result requirement includes a result requirement that all the feature recognition results corresponding to the first time information are not the preset results or a first number of preset results in the feature recognition results corresponding to the first time information does not satisfy a number requirement.

According to some embodiments, the first time information is any moment for the current period in the preset continuous observation periods, and selecting the first beam feature set or the second beam feature set as the acquisition source of CSI includes:

in the case that the feature recognition results corresponding to the first time information are not all the preset results, determining that the acquisition source corresponding to the CSI within the second time information is an acquisition source of a static beam feature.

The time information is a preset continuous observation period, which may be for example, a time of observations (Tobs) period. Tobs may be, for example, a fixed Tobs, a value range of which may be, for example, 50 to 100 ms, or a period corresponding to Nbf effective recognition results for the wide and narrow beam effect, where Nbf is an abbreviation "number of observations" and is a fixed number of observations, a value range of which is 20 to 50. The time information is a Tobs period, which may balance a recognition success rate and recognition timeliness, improve the efficiency of determining the acquisition source of CSI, and improve a data reception performance of the communication device.

In response to some embodiments, the first time information is any moment for the current period in the preset continuous observation periods, and selecting the first beam feature set or the second beam feature set as the acquisition source of CSI includes:

in the case that a first number of preset results in the feature recognition results corresponding to the first time information do not satisfy a number requirement, determining that the acquisition source corresponding to the CSI within the second time information is an acquisition source of a static beam feature.

The number requirement may be, for example, that a ratio between the first number to the third number is less than a seventeenth threshold. The third number may be, for example, a total number of recognition results for the wide and narrow beam effect corresponding to the first time information.

The seventeenth threshold may, for example, represent a rate of observation (Rbf), a value range of which may, for example, be 60% to 90%.

The time information is a preset continuous observation period, for example, it may be a Tobs period. Tobs may be, for example, a fixed Tobs, a value range of which may be, for example, 50 to 100 ms, or a period corresponding to Nbf effective recognition results for the wide and narrow beam effect, where Nbf is a fixed number of observations, a value range of which is 20 to 50. The time information is a Tobs period, which may balance the recognition success rate and recognition timeliness, improve the efficiency of determining the acquisition source of CSI, and improve the data reception performance of the communication device.

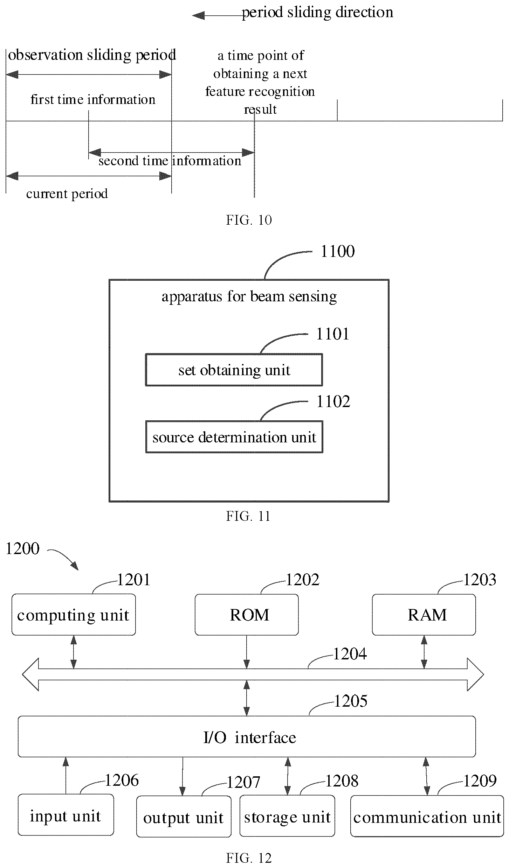

According to some embodiments, for a continuous observation sliding cycle, first time information is any moment for a current period in continuous observation sliding periods, and second time information is time information before a next feature recognition result is obtained. At this time, an example schematic diagram of the first time information and the second time information may be illustrated in, for example, FIG. 10. A period sliding direction is an example schematic direction.

According to some embodiments, selecting the first beam feature set or the second beam feature set as the acquisition source of CSI includes:

in response to feature recognition results corresponding to first time information satisfying a first result requirement, and an RRC connection of a communication device being not reconfigured or released, determining that an acquisition source corresponding to the CSI within second time information is an acquisition source of a dynamic beam feature, in which the first time information is any moment for a current period in continuous observation sliding periods, the second time information is time information before a next feature recognition result is obtained, and the first result requirement includes a result requirement that all the feature recognition results corresponding to the first time information are the preset results or a result requirement that a second number of preset results in the feature recognition results corresponding to the first time information satisfy a number requirement.

According to some embodiments, selecting the first beam feature set or the second beam feature set as the acquisition source of CSI includes:

in response to feature recognition results corresponding to first time information satisfying a second result requirement, determining that an acquisition source corresponding to the CSI within second time information is an acquisition source of a static beam feature, in which the first time information is any moment for a current period in continuous observation sliding periods, the second time information is time information before a next feature recognition result is not obtained, and the second result requirement includes a result requirement that all the feature recognition results corresponding to the first time information are not the preset results or a result requirement that a second number of preset results in the feature recognition results corresponding to the first time information does not satisfy a number requirement; and

observing update information corresponding to the first time information before a feature recognition result corresponding to the second time information is obtained, taking updated first time information as the first time information and redetermining the acquisition source corresponding to the CSI within the second time information.

According to some embodiments, the first time information may be, for example, a continuous observation Tobs sliding window. When the feature recognition results corresponding to the first time information are all the preset results and the RRC connection of the communication device has not been reconfigured or released, the acquisition source of CSI is locked to the acquisition source of the dynamic beam feature before the feature recognition result is obtained again.

According to some embodiments, the first time information may be, for example, a continuous observation Tobs sliding window. When the feature recognition results corresponding to the first time information are not all the preset results, the acquisition source of CSI is the acquisition source of the static beam feature before the feature recognition result is obtained again. The preset result may be, for example, "yes", which is not limited in the embodiments of the invention.

According to some embodiments, before the feature recognition result is obtained again, the sliding window is updated and the acquisition source of the beam feature is redetermined.

The value range of a continuous observation Tobs sliding window length corresponding to the continuous observation Tobs sliding window may be, for example, 50 to 100 ms or the period corresponding to Nbf consecutive effective recognition results for the wide and narrow beam effect, where Nbf is a number of sliding observations, the value range of which may be, for example, 20 to 50.

In response to some embodiments, the first time information is any moment for the current period in the continuous observation sliding periods, and selecting the first beam feature set or the second beam feature set as the acquisition source of CSI includes:

in the case that a second number of preset results in the feature recognition results corresponding to the first time information satisfy a number requirement and an RRC connection of a communication device has not been reconfigured or released, determining that the acquisition source corresponding to the CSI within the second time information is an acquisition source of a dynamic beam feature, in which the second time information is time information before a next feature recognition result is obtained.

In response to some embodiments, the first time information is any moment for a current period in continuous observation sliding periods, and selecting the first beam feature set or the second beam feature set as the acquisition source of CSI includes:

in the case that a second number of preset results in the feature recognition results corresponding to the first time information does not satisfy a number requirement, determining that an acquisition source corresponding to the CSI within second time information is an acquisition source of a static beam feature; and

observing update information corresponding to the first time information before a feature recognition result corresponding to the second time information is obtained, taking updated first time information as the first time information and redetermining the acquisition source corresponding to the CSI within the second time information. The first time information is a sliding observation time window length. The first time information is a preset duration or a period corresponding to consecutive effective recognition results for the wide and narrow beam effect with a preset number of sliding observations.

The number requirement may be, for example, that a ratio between the second number and the fourth number is greater than an eighteenth threshold. The fourth number may be, for example, a total number of recognition results for the wide and narrow beam effect corresponding to the first time information.

The nineteenth threshold may, for example, represent an observation ratio threshold Rbf, a value range of which may be, for example, 60% to 90%. The value range of a continuous observation Tobs sliding window length corresponding to the continuous observation Tobs sliding window may be, for example, 50 to 100 ms or the period corresponding to Nbf consecutive effective recognition results for the wide and narrow beam effect, where Nbf is a number of sliding observations, the value range of which may be, for example, 20 to 50.

It should be noted that each threshold in the embodiments of the invention do not specifically refer to a fixed threshold. For example, it may be accordingly adjusted according to a threshold modification instruction, or accordingly changed according to the network standard, which is not limited in the embodiments of the invention.

In some or related embodiments, a current camping cell of the communication device is obtained; in response to network standard information corresponding to the current camping cell and a DL beamforming determination sequence, DL beamforming support information corresponding to a current network standard of the current camping cell is determined. Therefore, a mechanism for beam sensing may be provided. The DL beamforming support information may be determined in response to the network standard information and the DL beamforming determination sequence, which may improve the accuracy of determining the DL beamforming support information. According to the DL static beam feature set and the DL dynamic beam feature set, the feature recognition result is determined in the case of determining to support the DL dynamic beamforming, which improves the accuracy of determining the feature recognition result, which may improve the accuracy of determining the acquisition source corresponding to the CSI, reduce the situation where the wide and narrow beam effect causes the poor acquisition accuracy of the CSI required for channel estimation, improve the reception state of the communication device, improve the robustness of the DL reception performance, and improve the communication quality of the communication device. Secondly, the recognition result for the wide and narrow beam effect may be determined according to the at least one piece of threshold information or the preset neural network model for beam sensing, and the feature recognition result may be determined in different ways, which may improve the accuracy of determining the acquisition source.

FIG. 11 is a block diagram illustrating an apparatus for beam sensing according to an embodiment. Referring to FIG. 11, the apparatus 1100 includes: a set obtaining unit 110 1, and a source determination unit 1102.

The set obtaining unit 1101 is configured to obtain a first beam feature set and a second beam feature set related to a current network standard.

The source determination unit 1102 is configured to in response to at least one first parameter of the first beam feature set and at least one second parameter of the second beam feature set satisfying a preset condition, select the first beam feature set or the second beam feature set as an acquisition source of CSI, in which the first beam feature set is related to the at least one first parameter and the second beam feature set is related to the at least one second parameter.

According to some embodiments, the source determination unit 1102 is further configured to: in response to a calculation result between the at least one first parameter of the first beam feature set and the at least one second parameter of the second beam feature set and at least one piece of threshold information, obtain a feature recognition result, in which the feature recognition result indicates whether the at least one first parameter of the first beam feature set and the at least one second parameter of the second beam feature set satisfy the preset condition.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to obtain the feature recognition result by comparing a difference result and/or a ratio result between the at least one first parameter of the first beam feature set and the at least one second parameter of the second beam feature set with the at least one piece of threshold information.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a first difference between any second parameter and any first parameter being greater than a first threshold, determine that the feature recognition result is a preset result, in which the first threshold represents an index threshold of a relative SINR, and the preset result indicates that the at least one first parameter of the first beam feature set and the at least one second parameter of the second beam feature set satisfy the preset condition.

According to some embodiments, the at least one first parameter includes at least one of: a CRS-SINR, a PSS-SINR, or a SSS-SINR; the at least one second parameter includes at least one of a PDSCH-SINR; or the at least one first parameter includes at least one of: a RS CSI-SINR, or a SS-SINR; the at least one second parameter includes at least one of: a PDSCH-SINR or a PDCCH-SINR.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a first ratio between any first parameter and any second parameter being greater than a second threshold, determine that the feature recognition result is a preset result, in which the second threshold represents an index threshold of a relative maximum delay spread, and the preset result indicates that the at least one first parameter of the first beam feature set and the at least one second parameter of the second beam feature set satisfy the preset condition.

According to some embodiments, the at least one first parameter includes a CRS-Tmax, and the at least one second parameter includes at least one of: a PDSCH-Tmax; or the at least one first parameter includes a TRS-Tmax, and the at least one second parameter includes at least one of: a PDSCH-Tmax or a PDCCH-Tmax.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a second ratio between any first parameter and any second parameter being greater than a third threshold, determine that the feature recognition result is a preset result, in which the third threshold represents an index threshold of a relative Trms, and the preset result indicates that the at least one first parameter of the first beam feature set and the at least one second parameter of the second beam feature set satisfy the preset condition.

According to some embodiments, the at least one first parameter includes a CRS-Trms, and the at least one second parameter includes at least one of: a PDSCH-Trms; or the at least one first parameter includes a TRS-Trms, and the at least one second parameter includes at least one of: a PDSCH-Trms or a PDCCH-Trms.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a second difference between any SINR in the at least one second parameter and any SINR in the at least one first parameter being greater than a fourth threshold, and a third ratio between any maximum Doppler in the at least one second parameter and any maximum Doppler in the at least one first parameter being less than a fifth threshold, determine that the feature recognition result is a preset result, in which the fourth threshold represents an index threshold of a relative SINR, the fifth threshold represents an index threshold of a relative maximum Doppler, and the preset result indicates that the at least one first parameter of the first beam feature set and the at least one second parameter of the second beam feature set satisfy the preset condition.

According to some embodiments, the at least one first parameter includes at least one of: a CRS-SINR, a PSS-SINR, a SSS-SINR or a CRS-Doppler, and the at least one second parameter includes at least one of: a PDSCH-SINR, a PSS-SINR or a PDSCH-Doppler; or the at least one first parameter includes at least one of: a TRS CSI-SINR, a SS-SINR or a TRS-Doppler, and the at least one second parameter includes at least one of: a PDCCH-SINR, a PDCCH-Doppler or a PDSCH-Doppler.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a fourth ratio between any Tmax in the at least one second parameter and any Tmax in the at least one first parameter being greater than a sixth threshold, and a fifth ratio between any maximum Doppler in the at least one second parameter and any maximum Doppler in the at least one first parameter being less than a seventh threshold, determine that the feature recognition result is a preset result, in which the sixth threshold represents an index threshold of a relative Tmax, the seventh threshold represents an index threshold of a relative maximum Doppler, the preset result indicates that the at least one first parameter of the first beam feature set and the at least one second parameter of the second beam feature set satisfy the preset condition.

According to some embodiments, the at least one first parameter includes at least one of: a CRS-Tmax or a CRS-Doppler, and the at least one second parameter includes at least one of: a PDSCH-Doppler or a PDCCH-Tmax; or the at least one first parameter includes at least one of: a TRS-Tmax or a TRS-Doppler, and the at least one second parameter includes at least one of: a PDSCH-Tmax, a PDCCH-Tmax, a PDSCH-Doppler or a PDCCH-Doppler.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a sixth ratio between any maximum Trms in the at least one second parameter and any maximum Trms in the at least one first parameter being greater than an eighth threshold, and a seventh ratio between any maximum Doppler in the at least one second parameter and any maximum Doppler in the at least one first parameter being less than a ninth threshold, determine that the feature recognition result is a preset result, in which the eighth threshold represents an index threshold of a relative maximum Trms, the ninth threshold represents an index threshold of a relative maximum Doppler, and the preset result indicates that the at least one first parameter of the first beam feature set and the at least one second parameter of the second beam feature set satisfy the preset condition.

According to some embodiments, the at least one first parameter includes at least one of: a CRS-Trms or a CRS-Doppler, the at least one second parameter includes at least one of: a PDSCH-Trms or a PDSCH-Doppler; or the at least one first parameter includes at least one of: a TRS-Trms or a TRS-Doppler, the at least one second parameter includes at least one of: a PDSCH-Trms, a PDCCH-Trms, a PDSCH-Doppler or a PDCCH-Doppler

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a third difference between any SINR in the at least one second parameter and any SINR in the at least one first parameter being greater than a tenth threshold, and an eighth ratio between any Tmax in the at least one second parameter and any Tmax in the at least one first parameter being greater than an eleventh threshold, determine that the feature recognition result is a preset result, in which the tenth threshold represents an index threshold of a relative SINR, the eleventh threshold represents an index threshold of a relative Tmax, and the preset result indicates that the at least one first parameter of the first beam feature set and the at least one second parameter of the second beam feature set satisfy the preset condition.

According to some embodiments, the at least one first parameter includes at least one of: a CRS-SINR, a PSS-SINR, a SSS-SINR or a CRS-Tmax, and the at least one second parameter includes at least one of: a PDSCH-SINR or a PDSCH-Tmax; or the at least one first parameter includes at least one of: a TRS CSI-SINR, a SS-SINR or a TRS-Tmax, and the at least one second parameter includes at least one of: a PDSCH- SINR, a PDCCH-SINR, a PDSCH-Tmax or a PDCCH-Tmax.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a fourth difference between any SINR in the at least one second parameter and any SINR in the at least one first parameter being greater than a twelfth threshold, and a ninth ratio between any maximum Trms in the at least one second parameter and any maximum Trms in the at least one first parameter being greater than a thirteenth threshold, determine that the feature recognition result is a preset result, in which the twelfth threshold represents an index threshold of a relative SINR, the thirteenth threshold represents an index threshold of a relative maximum Trms, and the preset result indicates that the at least one first parameter of the first beam feature set and the at least one second parameter of the second beam feature set satisfy the preset condition.

According to some embodiments, the at least one first parameter includes at least one of: a CRS-SINR, a PSS-SINR, a SSS-SINR or a CRS-Tmax, and the at least one second parameter includes at least one of: a PDSCH-SINR or a PDSCH-Tmax; or the at least one first parameter includes at least one of: a TRS CSI-SINR, a SS-SINR or a TRS-Tmax, and the at least one second parameter includes at least one of: a PDSCH-SINR, a PDCCH-SINR, a PDSCH-Tmax or a PDCCH-Tmax.

According to some embodiments, when the feature recognition result is obtained in response to the calculation result between the at least one first parameter of the first beam feature set and the at least one second parameter of the second beam feature set and the at least one piece of threshold information, the source determination unit 1102 is specifically configured to in response to a fifth difference between any SINR in the at least one second parameter and any SINR in the at least one first parameter being greater than a fourteenth threshold, a tenth ratio between any Tmax in the at least one second parameter and any Tmax in the at least one first parameter being greater than a fifteenth threshold, and an eleventh ratio between any maximum Trms in the at least one second parameter and any maximum Trms in the at least one first parameter being greater than a sixteenth threshold, determine that the feature recognition result is a preset result, in which the fourteenth threshold represents an index threshold of a relative SINR, the fifteenth threshold represents an index threshold of a relative Tmax, the sixteenth threshold represents an index threshold of a relative maximum Trms, and the preset result indicates that the at least one first parameter of the first beam feature set and the at least one second parameter of the second beam feature set satisfy the preset condition.

According to some embodiments, the at least one first parameter includes at least one of: a CRS-SINR, a PSS-SINR, a SSS-SINR, a CRS-Tmax or a CRS-Trms, and the at least one second parameter includes at least one of: a PDSCH-SINR, a PDSCH-Tmax or a PDSCH-Trms; or the at least one first parameter includes at least one of: a TRS CSI-SINR, a SS-SINR, a CRS-Tmax or a CRS-Trms, the at least one second parameter includes at least one of: a PDSCH-SINR, a PDCCH-SINR, a PDSCH-Tmax, a PDCCH-Tmax, a PDSCH-Trms or a PDSCH-Trms.

According to some embodiments, the source determination unit 1102 is specifically configured to input the at least one first parameter of the first beam feature set and the at least one second parameter of the second beam feature set into a preset neural network model for beam sensing, and obtain a feature recognition result output by the preset neural network model for beam sensing, in which the feature recognition result indicates whether the at least one first parameter of the first beam feature set and the at least one second parameter of the second beam feature set satisfy the preset condition.

According to some embodiments, when the at least one first parameter of the first beam feature set and the at least one second parameter of the second beam feature set are input into the preset neural network model for beam sensing, and the feature recognition result output by the preset neural network model for beam sensing is obtained, the source determination unit 1102 is specifically configured to input the at least one first parameter of the first beam feature set and the at least one second parameter of the second beam feature set into the preset neural network model for beam sensing, and obtaining a vector corresponding to the at least one first parameter and the at least one second parameter; and obtain the feature recognition result output by the preset neural network model for beam sensing, by performing a recognition processing on the vector with an activation function of the preset neural network model for beam sensing.

According to some embodiments, when the first beam feature set or the second beam feature set as the acquisition source of CSI are selected, the source determination unit 1102 is specifically configured to in response to feature recognition results corresponding to first time information satisfying a first result requirement, and an RRC connection of a communication device being not reconfigured or released, determine that an acquisition source corresponding to the CSI within second time information is an acquisition source of a dynamic beam feature, in which the first time information is any moment for a current period in preset continuous observation periods, and the second time information is a next preset period adjacent to the current period, and the first result requirement includes a result requirement that all the feature recognition results corresponding to the first time information are the preset results, or a result requirement that a first number of preset results in the feature recognition results corresponding to the first time information satisfy a number requirement.

According to some embodiments, when the first beam feature set or the second beam feature set as the acquisition source of CSI are selected, the source determination unit 1102 is specifically configured to in response to feature recognition results corresponding to first time information satisfying a second result requirement, determine that an acquisition source corresponding to the CSI within second time information is an acquisition source of a static beam feature, in which the first time information is any moment for a current period in preset continuous observation periods, and the second result requirement includes a result requirement that all the feature recognition results corresponding to the first time information are not the preset results or a first number of preset results in the feature recognition results corresponding to the first time information does not satisfy a number requirement.

According to some embodiments, when the first beam feature set or the second beam feature set as the acquisition source of CSI are selected, the source determination unit 1102 is specifically configured to in response to feature recognition results corresponding to first time information satisfying a first result requirement, and an RRC connection of a communication device being not reconfigured or released, determine that an acquisition source corresponding to the CSI within second time information is an acquisition source of a dynamic beam feature, in which the first time information is any moment for a current period in continuous observation sliding periods, the second time information is time information before a next feature recognition result is obtained, and the first result requirement includes a result requirement that all the feature recognition results corresponding to the first time information are the preset results or a result requirement that a second number of preset results in the feature recognition results corresponding to the first time information satisfy a number requirement.

According to some embodiments, when the first beam feature set or the second beam feature set as the acquisition source of CSI are selected, the source determination unit 1102 is specifically configured to in response to feature recognition results corresponding to first time information satisfying a second result requirement, determine that an acquisition source corresponding to the CSI within second time information is an acquisition source of a static beam feature, in which the first time information is any moment for a current period in continuous observation sliding periods, the second time information is time information before a next feature recognition result is obtained, and the second result requirement includes a result requirement that all the feature recognition results corresponding to the first time information are not the preset results or a result requirement that a second number of preset results in the feature recognition results corresponding to the first time information does not satisfy a number requirement; and observe update information corresponding to the first time information before a feature recognition result corresponding to the second time information is obtained, take updated first time information as the first time information and redetermine the acquisition source corresponding to the CSI within the second time information.

According to some embodiments, the first beam feature set includes a DL static beam feature set, and the second beam feature set includes a DL dynamic beam feature set.

According to some embodiments, the first beam feature set includes a DL static beam feature set, and the second beam feature set includes a DL dynamic beam feature set, when the first beam feature set and the second beam feature set related to the current network standard are obtained, the set obtaining unit 1101 is specifically configured to obtain the DL static beam feature set related to a current network standard by performing feature extraction on an SS and/or an RS of a broadband wireless communication system with DL beamforming enabled; and obtain the DL dynamic beam feature set related to the current network standard by performing feature extraction on a DMRS of a broadband wireless communication system with DL dynamic beamforming enabled.

According to some embodiments, the set obtaining unit 1101 is further configured to obtain a current camping cell of a communication device; and in response to network standard information corresponding to the current camping cell and a DL beamforming determination sequence, determine DL beamforming support information corresponding to a current network standard for the current camping cell.

According to some embodiments, when the DL beamforming support information corresponding to the current network standard for the current camping cell is determined in response to the network standard information corresponding to the current camping cell and the DL beamforming determination sequence, the set obtaining unit 1101 is specifically configured to: obtain the network standard information corresponding to the current camping cell; in response to the network standard information corresponding to the current camping cell being a first network standard, determine that the communication device is in an RRC_CONNECTED; in response to a dedicated configuration signaling indicating that the communication device is in a preset transmission mode, obtain first scene information corresponding to the current camping cell; and in response to the first scene information being preset scene information, determine that DL beamforming support information corresponding to the first network standard is that the first network standard supports DL dynamic beamforming.

According to some embodiments, when the DL beamforming support information corresponding to the current network standard for the current camping cell is determined in response to the network standard information corresponding to the current camping cell and the DL beamforming determination sequence, the set obtaining unit 1101 is specifically configured to: obtain the network standard information corresponding to the current camping cell; in response to the network standard information corresponding to the current camping cell being a first network standard, determine that the communication device is in an RRC_CONNECTED; and in response to a dedicated configuration signaling indicating that the communication device is not in a preset transmission mode or first scene information is not preset scene information, determine that DL beamforming support information corresponding to the first network standard is that the first network standard does not support DL dynamic beamforming.

According to some embodiments, the DL beamforming support information corresponding to the current network standard for the current camping cell is determined in response to the network standard information corresponding to the current camping cell and the DL beamforming determination sequence, the set obtaining unit 1101 is specifically

**EP 4 651 397 A1**

configured to: in response to the network standard information corresponding to the current camping cell being not a first network standard, determine that the network standard information corresponding to the current camping cell is a second network standard; and in response to frequency range information of the current camping cell being a first frequency range, a communication mode of the current camping cell being time division duplex, and second scene information corresponding to the current camping cell being preset scene information, determine that DL beamforming support information corresponding to the second network standard is that the second network standard supports DL dynamic beamforming.

According to some embodiments, the DL beamforming support information corresponding to the current network standard for the current camping cell is determined in response to the network standard information corresponding to the current camping cell and the DL beamforming determination sequence, the set obtaining unit 1101 is specifically configured to: in response to the network standard information corresponding to the current camping cell being not a first network standard, determine that the network standard information corresponding to the current camping cell is a second network standard; and in response to frequency range information of the current camping cell being not a first frequency range, a communication mode of the current camping cell being not time division duplex, or second scene information corresponding to the current camping cell being not preset scene information, determine that DL beamforming support information corresponding to the second network standard is that the second network standard does not support DL dynamic beamforming.

According to some embodiments, the DL beamforming support information corresponding to the current network standard for the current camping cell is determined in response to the network standard information corresponding to the current camping cell and the DL beamforming determination sequence, the set obtaining unit 1101 is specifically configured to: in response to the network standard information corresponding to the current camping cell being not a second network standard, determine whether the network standard information corresponding to the current camping cell is a third network standard; and in response to determining that the network standard information corresponding to the current camping cell is the third network standard, determine the DL beamforming support information corresponding to the current network standard for the current camping cell by using a determination mode corresponding to the third network standard.

According to some embodiments, the set obtaining unit 1101 is further configured to in response to determining that an RRC signaling reconfiguration occurs in the RRC _CONNECTED, redetermine the DL beamforming support information corresponding to the current network standard for the current camping cell.

Regarding the apparatus in the above embodiments, the specific manner in which each module performs operations has been described in detail in the embodiments of the method, which will not be elaborated here again.

In some or related embodiments, the set obtaining unit is configured to obtain the first beam feature set and the second beam feature set related to the current network standard; and the source determination unit is configured to in response to the at least one first parameter of the first beam feature set and at least one second parameter of the second beam feature set satisfying the preset condition, select the first beam feature set or the second beam feature set as the acquisition source of CSI, in which the first beam feature set is related to the at least one first parameter and the second beam feature set is related to the at least one second parameter. Therefore, a mechanism for beam sensing may be provided. The acquisition source corresponding to the CSI may be determined according to whether the at least one first parameter of the first beam feature set and the at least one second parameter of the second beam feature set satisfy the preset condition, which may improve the accuracy of determining the acquisition source corresponding to the CSI, and reduce the situation where determination of the CSI is inaccurate due to the fact that the CSI required for channel estimation does not match the acquisition source. As such, the accuracy of obtaining the CSI may be improved, the reception state of the communication device may be improved, and the communication quality of the communication device may be improved.

FIG. 12 illustrates a block diagram of an example communication device 1200 that may be used to implement the method in embodiments of the invention. The communication device is intended to represent various types of digital computers, such as laptop computers, desktop computers, workstations, personal digital assistants, servers, blade servers, mainframe computers, and other suitable computers. The communication device may also represent various types of mobile devices, such as personal digital assistants, cellular phones, smart phones, wearable devices, and other similar computing devices. The components shown herein, their connections and relations, and their functions are merely examples, which are not intended to limit the implementations of the invention described and/or required herein.

As shown in FIG. 12, the communication device 1200 includes a computing unit 1201, configured to execute various appropriate actions and processes according to computer programs stored in a read-only memory (ROM) 1202 or computer programs loaded from a storage unit 1208 to a random access memory (RAM) 1203. In the RAM 1203, various programs and data required for the communication device 1200 may be stored. The computing unit 1201, the ROM 1202 and the RAM 1203 may be connected with each other by a bus 1204. An input/output (I/O) interface 1205 is also connected to the bus 1204.

The plurality of components in the communication device 1200 are connected to the I/O interface 1205, which include: an input unit 1206, for example, a keyboard, a mouse; an output unit 1207, for example, various types of displays,

34

speakers; a storage unit 1208, for example, a magnetic disk, an optical disk; and a communication unit 1209, for example, a network card, a modem, a wireless transceiver. The communication unit 1209 allows the communication device 1200 to exchange information/data through a computer network such as Internet and/or various types of telecommunication networks with other communication devices.

The computing unit 1201 may be various types of general and/or dedicated processing components with processing and computing abilities. Some examples of a computing unit 1201 include but not limited to a central processing unit (CPU), a graphics processing unit (GPU), various dedicated artificial intelligence (AI) computing chips, various computing units on which a machine learning model algorithm is running, a digital signal processor (DSP), and any appropriate processor, controller, microcontroller, etc. The computing unit 1201 executes various methods and processes as described above, for example, the method for beam sensing or the method for model training. For example, in some embodiments, the method for beam sensing or the method for model training may be further implemented as a computer software program, which is tangibly contained in a machine readable medium, such as the storage unit 1208. In some embodiments, a part or all of the computer programs may be loaded and/or installed on the communication device 1200 via the ROM 1202 and/or the communication unit 1209. When the computer programs are loaded on the RAM 1203 and executed by the computing unit 1201, one or more steps in the method for beam sensing or the method for model training may be performed as described above. Optionally, in other embodiments, the computing unit 1201 may be configured to perform the method for beam sensing in other appropriate ways (for example, by virtue of a firmware).

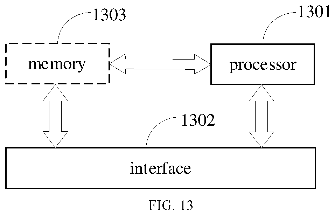

FIG. 13 is a block diagram illustrating a chip according to an embodiment. The chip 1300 illustrated in FIG. 13 includes a processor 1301 and an interface 1302. Optionally, the chip may also include a memory 1303. There may be one or more processors 1301, and a plurality of interfaces 1302.

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided for the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAMs, ROMs, Electrically Programmable Read-Only-Memory (EPROM), fiber optics, Compact Disc Read-Only Memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user may interact with the implementation of the systems and technologies described herein), or include such background components, intermediate computing components, or any combination of front-end components. The components of the system may be interconnected by any form or medium of digital data communication (e.g., a communication network). Examples of communication networks include: a local area network (LAN), a wide area network (WAN), the Internet and a blockchain network.

The computer system may include a client and a server. The client and server are generally remote from each other and interacting through a communication network. The client-server relation is generated by computer programs/instructions running on the respective computers and having a client-server relation with each other. The server may be a cloud server, also known as a cloud computing server or a cloud host, which is a host product in a cloud computing service system to solve the defects of difficult management and weak service scalability in conventional physical hosts and virtual private server ("VPS" for short) services. The server may also be a server of a distributed system, or a server combined with a block-chain.

It should be understood that the various forms of processes shown above may be used to reorder, add or delete steps. For example, the steps described in the invention could be performed in parallel, sequentially, or in a different order, as long as the desired result of the technical solution disclosed in the invention is achieved, which is not limited herein.

**Claims**

1. A method for beam sensing, performed by a communication device, comprising:

   obtaining a first beam feature set and a second beam feature set related to a current network standard; and
   in response to at least one first parameter of the first beam feature set and at least one second parameter of the second beam feature set satisfying a preset condition, selecting the first beam feature set or the second beam feature set as an acquisition source of channel state information, CSI, wherein the first beam feature set is related to the at least one first parameter and the second beam feature set is related to the at least one second parameter.

2. The method of claim 1, further comprising:
   in response to a calculation result between the at least one first parameter of the first beam feature set and the at least one second parameter of the second beam feature set and at least one piece of threshold information, obtaining a feature recognition result, wherein the feature recognition result indicates whether the at least one first parameter of the first beam feature set and the at least one second parameter of the second beam feature set satisfy the preset condition.

3. The method of claim 2, wherein in response to the calculation result between the at least one first parameter of the first beam feature set and the at least one second parameter of the second beam feature set and the at least one piece of threshold information, obtaining the feature recognition result comprises:
   obtaining the feature recognition result by comparing at least one of a difference result or a ratio result between the at least one first parameter of the first beam feature set and the at least one second parameter of the second beam feature set with the at least one piece of threshold information.

4. The method of claim 2 or 3, wherein in response to the calculation result between the at least one first parameter of the first beam feature set and the at least one second parameter of the second beam feature set and the at least one piece of threshold information, obtaining the feature recognition result comprises:
   determining that the feature recognition result is a preset result, in response to satisfying any one of:

   a first difference between any second parameter and any first parameter being greater than a first threshold, wherein the first threshold represents an index threshold of a relative signal to interference plus noise ratio, SINR,
   a first ratio between any first parameter and any second parameter being greater than a second threshold, wherein the second threshold represents an index threshold of a relative maximum delay spread, Tmax,
   a second ratio between any first parameter and any second parameter being greater than a third threshold, wherein the third threshold represents an index threshold of a relative root mean square delay spread, Trms,
   a third difference between any SINR in the at least one second parameter and any SINR in the at least one first parameter being greater than a tenth threshold, and an eighth ratio between any Tmax in the at least one second parameter and any Tmax in the at least one first parameter being greater than an eleventh threshold, wherein the tenth threshold represents an index threshold of a relative SINR, and the eleventh threshold represents an index threshold of a relative Tmax,
   a fourth difference between any SINR in the at least one second parameter and any SINR in the at least one first parameter being greater than a twelfth threshold, and a ninth ratio between any maximum Trms in the at least one second parameter and any maximum Trms in the at least one first parameter being greater than a thirteenth threshold, wherein the twelfth threshold represents an index threshold of a relative SINR, and the thirteenth threshold represents an index threshold of a relative maximum Trms, or

a fifth difference between any SINR in the at least one second parameter and any SINR in the at least one first parameter being greater than a fourteenth threshold, a tenth ratio between any Tmax in the at least one second parameter and any Tmax in the at least one first parameter being greater than a fifteenth threshold, and an eleventh ratio between any maximum Trms in the at least one second parameter and any maximum Trms in the at least one first parameter being greater than a sixteenth threshold, wherein the fourteenth threshold represents an index threshold of a relative SINR, the fifteenth threshold represents an index threshold of a relative Tmax, and the sixteenth threshold represents an index threshold of a relative maximum Trms,

wherein the preset result indicates that the at least one first parameter of the first beam feature set and the at least one second parameter of the second beam feature set satisfy the preset condition,

optionally wherein the at least one first parameter comprises at least one of: a cell-specific reference signal - signal to interference plus noise ratio, CRS-SINR, a primary synchronization signal - signal to interference plus noise ratio, PSS-SINR, or a secondary synchronization signal - signal to interference plus noise ratio, SSS-SINR, and the at least one second parameter comprises a physical downlink shared channel - signal to interference plus noise ratio, PDSCH-SINR; or the at least one first parameter comprises at least one of: a tracking reference signal channel-state information - signal to interference plus noise ratio, TRS CSI-SINR, or a synchronization signal - signal to interference plus noise ratio, SS-SINR, and the at least one second parameter comprises at least one of: a PDSCH-SINR or a physical downlink control channel - signal to interference plus noise ratio, PDCCH-SINR; optionally wherein the at least one first parameter comprises a cell-specific reference signal - maximum delay spread, CRS-Tmax, and the at least one second parameter comprises a physical downlink shared channel - maximum delay spread, PDSCH-Tmax; or the at least one first parameter comprises a tracking reference signal - maximum delay spread, TRS-Tmax, and the at least one second parameter comprises at least one of: a PDSCH-Tmax or a physical downlink control channel - maximum delay spread, PDCCH-Tmax; optionally wherein the at least one first parameter comprises a cell-specific reference signal - root mean square delay spread, CRS-Trms, and the at least one second parameter comprises a physical downlink shared channel - root mean square delay spread, PDSCH-Trms; or the at least one first parameter comprises a tracking reference signal - root mean square delay spread, TRS-Trms, and the at least one second parameter comprises at least one of: a PDSCH-Trms or a physical downlink control channel - root mean square delay spread, PDCCH-Trms; optionally wherein the at least one first parameter comprises at least one of: a CRS-SINR, a PSS-SINR, a SSS-SINR or a CRS-Tmax, and the at least one second parameter comprises at least one of: a PDSCH-SINR or a PDSCH-Tmax; or the at least one first parameter comprises at least one of: a TRS CSI-SINR, a SS-SINR or a TRS-Tmax, and the at least one second parameter comprises at least one of: a PDSCH- SINR, a PDCCH-SINR, a PDSCH-Tmax or a PDCCH-Tmax; optionally wherein the at least one first parameter comprises at least one of: a CRS-SINR, a PSS-SINR, a SSS-SINR or a CRS-Tmax, and the at least one second parameter comprises at least one of: a PDSCH-SINR or a PDSCH-Tmax; or the at least one first parameter comprises at least one of: a TRS CSI-SINR, a SS-SINR or a TRS-Tmax, and the at least one second parameter comprises at least one of: a PDSCH-SINR, a PDCCH-SINR, a PDSCH-Tmax or a PDCCH-Tmax; optionally wherein the at least one first parameter comprises at least one of: a CRS-SINR, a PSS-SINR, a SSS-SINR, a CRS-Tmax or a CRS-Trms, and the at least one second parameter comprises at least one of: a PDSCH-SINR, a PDSCH-Tmax or a PDSCH-Trms; or the at least one first parameter comprises at least one of: a TRS CSI-SINR, a SS-SINR, a CRS-Tmax or a CRS-Trms, and the at least one second parameter comprises at least one of: a PDSCH-SINR, a PDCCH-SINR, a PDSCH-Tmax, a PDCCH-Tmax, a PDSCH-Trms or a PDSCH-Trms.

5. The method of claim 2 or 3, wherein in response to the calculation result between the at least one first parameter of the first beam feature set and the at least one second parameter of the second beam feature set and the at least one piece of threshold information, obtaining the feature recognition result comprises:
determining that the feature recognition result is a preset result, in response to satisfying any one of:

a second difference between any SINR in the at least one second parameter and any SINR in the at least one first parameter being greater than a fourth threshold, and a third ratio between any maximum Doppler in the at least one second parameter and any maximum Doppler in the at least one first parameter being less than a fifth threshold, wherein the fourth threshold represents an index threshold of a relative SINR, and the fifth threshold represents an index threshold of a relative maximum Doppler,

a fourth ratio between any maximum delay spread, Tmax, in the at least one second parameter and any Tmax in the at least one first parameter being greater than a sixth threshold, and a fifth ratio between any maximum Doppler in the at least one second parameter and any maximum Doppler in the at least one first parameter being less than a seventh threshold, wherein the sixth threshold represents an index threshold of a relative Tmax, and the seventh threshold represents an index threshold of a relative maximum Doppler, or

a sixth ratio between any maximum root mean square delay spread, Trms, in the at least one second parameter and any maximum Trms in the at least one first parameter being greater than an eighth threshold, and a seventh ratio between any maximum Doppler in the at least one second parameter and any maximum Doppler in the at least one first parameter being less than a ninth threshold, wherein the eighth threshold represents an index threshold of a relative maximum Trms, and the ninth threshold represents an index threshold of a relative maximum Doppler,

wherein the preset result indicates that the at least one first parameter of the first beam feature set and the at least one second parameter of the second beam feature set satisfy the preset condition,

optionally wherein the at least one first parameter comprises at least one of: a CRS-SINR, a PSS-SINR, a SSS-SINR or a cell-specific reference signal-maximum Doppler, CRS-Doppler, and the at least one second parameter comprises at least one of: a PDSCH-SINR, a PSS-SINR or a physical downlink shared channel - maximum Doppler, PDSCH-Doppler; or the at least one first parameter comprises at least one of: a TRS CSI-SINR, a SS-SINR or a tracking reference signal - maximum Doppler, TRS-Doppler, and the at least one second parameter comprises at least one of: a PDCCH-SINR, a physical downlink control channel - maximum Doppler, PDCCH-Doppler, or a PDSCH-Doppler;

optionally wherein the at least one first parameter comprises at least one of: a CRS-Tmax or a CRS-Doppler, and the at least one second parameter comprises at least one of: a PDSCH-Doppler or a PDCCH-Tmax; or the at least one first parameter comprises at least one of: a TRS-Tmax or a TRS-Doppler, and the at least one second parameter comprises at least one of: a PDSCH-Tmax, a PDCCH-Tmax, a PDSCH-Doppler or a PDCCH-Doppler;

optionally wherein the at least one first parameter comprises at least one of: a CRS-Trms or a CRS-Doppler, and the at least one second parameter comprises at least one of: a PDSCH-Trms or a PDSCH-Doppler; or the at least one first parameter comprises at least one of: a TRS-Trms or a TRS-Doppler, and the at least one second parameter comprises at least one of: a PDSCH-Trms, a PDCCH-Trms, a PDSCH-Doppler or a PDCCH-Doppler.

6. The method of claim 1, further comprising:

inputting the at least one first parameter of the first beam feature set and the at least one second parameter of the second beam feature set into a preset neural network model for beam sensing, and obtaining a feature recognition result output by the preset neural network model for beam sensing, wherein the feature recognition result indicates whether the at least one first parameter of the first beam feature set and the at least one second parameter of the second beam feature set satisfy the preset condition;

optionally wherein inputting the at least one first parameter of the first beam feature set and the at least one second parameter of the second beam feature set into the preset neural network model for beam sensing, and obtaining the feature recognition result output by the preset neural network model for beam sensing comprises:

inputting the at least one first parameter of the first beam feature set and the at least one second parameter of the second beam feature set into the preset neural network model for beam sensing, and obtaining a vector corresponding to the at least one first parameter and the at least one second parameter; and

obtaining the feature recognition result output by the preset neural network model for beam sensing, by performing a recognition processing on the vector with an activation function of the preset neural network model for beam sensing.

7. The method of claim 2, wherein selecting the first beam feature set or the second beam feature set as the acquisition source of CSI comprises one of:

in response to feature recognition results corresponding to first time information satisfying a first result requirement, and an RRC connection of the communication device being not reconfigured or released, determining that an acquisition source corresponding to the CSI within second time information is an acquisition source of a dynamic beam feature, wherein the first time information is any moment for a current period in preset continuous observation periods, and the second time information is a next preset period adjacent to the current period, and the first result requirement comprises a result requirement that all the feature recognition results corresponding to the first time information are the preset results, or a result requirement that a first number of preset results in the feature recognition results corresponding to the first time information satisfy a number requirement;

in response to feature recognition results corresponding to first time information satisfying a second result requirement, determining that an acquisition source corresponding to the CSI within second time information is an acquisition source of a static beam feature, wherein the first time information is any moment for a current period in preset continuous observation periods, and the second result requirement comprises a result requirement that all the feature recognition results corresponding to the first time information are not the preset results or a first number of preset results in the feature recognition results corresponding to the first time information does not satisfy a number requirement;

in response to feature recognition results corresponding to first time information satisfying a first result requirement, and an RRC connection of a communication device being not reconfigured or released, determining that an acquisition source corresponding to the CSI within second time information is an acquisition source of a dynamic beam feature, wherein the first time information is any moment for a current period in continuous observation sliding periods, the second time information is time information before a next feature recognition result is obtained, and the first result requirement comprises a result requirement that all the feature recognition results corresponding to the first time information are the preset results or a result requirement that a second number of preset results in the feature recognition results corresponding to the first time information satisfy a number requirement; or

in response to feature recognition results corresponding to first time information satisfying a second result requirement, determining that an acquisition source corresponding to the CSI within second time information is an acquisition source of a static beam feature, wherein the first time information is any moment for a current period in continuous observation sliding periods, the second time information is time information before a next feature recognition result is obtained, and the second result requirement comprises a result requirement that all the feature recognition results corresponding to the first time information are not the preset results or a result requirement that a second number of preset results in the feature recognition results corresponding to the first time information does not satisfy a number requirement; and

observing update information corresponding to the first time information before a feature recognition result corresponding to the second time information is obtained, taking updated first time information as the first time information and redetermining the acquisition source corresponding to the CSI within the second time information.

8. The method of claim 1 or 2, wherein the first beam feature set comprises a DL static beam feature set, and the second beam feature set comprises a DL dynamic beam feature set,
   wherein obtaining the first beam feature set and the second beam feature set related to the current network standard comprises:

   obtaining the DL static beam feature set related to a current network standard by performing feature extraction on an SS and/or an RS of a broadband wireless communication system with DL beamforming enabled; and
   obtaining the DL dynamic beam feature set related to the current network standard by performing feature extraction on a demodulation reference signal, DMRS, of a broadband wireless communication system with DL dynamic beamforming enabled.

9. The method of claim 1 or 2, further comprising:

   obtaining a current camping cell of a communication device; and
   in response to network standard information corresponding to the current camping cell and a DL beamforming determination sequence, determining DL beamforming support information corresponding to a current network standard for the current camping cell.

10. The method of claim 9, wherein in response to the network standard information corresponding to the current camping cell and the DL beamforming determination sequence, determining the DL beamforming support information corresponding to the current network standard for the current camping cell comprises:

    obtaining the network standard information corresponding to the current camping cell;
    in response to the network standard information corresponding to the current camping cell being a first network standard, determining that the communication device is in a radio resource control connected state, RRC_CONNECTED;
    in response to a dedicated configuration signaling indicating that the communication device is in a preset transmission mode, obtaining first scene information corresponding to the current camping cell; and in response to the first scene information being preset scene information, determining that DL beamforming support information corresponding to the first network standard is that the first network standard supports DL dynamic beamforming; or
    in response to a dedicated configuration signaling indicating that the communication device is not in a preset transmission mode or first scene information is not preset scene information, determining that DL beamforming support information corresponding to the first network standard is that the first network standard does not support DL dynamic beamforming.

11. The method of claim 9, wherein in response to the network standard information corresponding to the current camping cell and the DL beamforming determination sequence, determining the DL beamforming support information corresponding to the current network standard for the current camping cell comprises:

in response to the network standard information corresponding to the current camping cell being not a first network standard, determining that the network standard information corresponding to the current camping cell is a second network standard; and

in response to frequency range information of the current camping cell being a first frequency range, a communication mode of the current camping cell being time division duplex, and second scene information corresponding to the current camping cell being preset scene information, determining that DL beamforming support information corresponding to the second network standard is that the second network standard supports DL dynamic beamforming; or

in response to frequency range information of the current camping cell being not a first frequency range, a communication mode of the current camping cell being not time division duplex, or second scene information corresponding to the current camping cell being not preset scene information, determining that DL beamforming support information corresponding to the second network standard is that the second network standard does not support DL dynamic beamforming.

12. The method of claim 9, wherein in response to the network standard information corresponding to the current camping cell and the DL beamforming determination sequence, determining the DL beamforming support information corresponding to the current network standard for the current camping cell comprises:

in response to the network standard information corresponding to the current camping cell being not a second network standard, determining whether the network standard information corresponding to the current camping cell is a third network standard; and

in response to determining that the network standard information corresponding to the current camping cell is the third network standard, determining the DL beamforming support information corresponding to the current network standard for the current camping cell by using a determination mode corresponding to the third network standard.

13. The method of any one of claims 10 to12, further comprising:
in response to determining that an RRC signaling reconfiguration occurs in the RRC_CONNECTED, redetermining the DL beamforming support information corresponding to the current network standard for the current camping cell.

14. A communication device, comprising:

a processor; and
a memory for storing instructions executable by the processor;
wherein, when the instructions are executed by the processor, the method of any one of claims 1 to 13 is implemented.

15. A chip comprising a processor and an interface, wherein the processor is configured to read instructions to implement the method of any one of claims 1 to 13.

FIG. 1

initial access stage     random access stage     RRC connection stage

FIG. 2

top view from gNB             bird's eye view

scenario based configuration: square
coverage

FIG. 3

| Slot1: SU-MIMO, Rank3 | Slot2: MU-MIMO, Rank2 |
|---|---|
| | |

FIG. 4

obtaining a first beam feature set and a second beam feature set related to a current network standard — S11

in response to at least one first parameter of the first beam feature set and at least one second parameter of the second beam feature set satisfying a preset condition, selecting the first beam feature set or the second beam feature set as an acquisition source of channel state information — S12

FIG. 5

obtaining a current camping cell of a communication device — S21

in response to network standard information corresponding to the current camping cell and a DL beamforming determination sequence, determining DL beamforming support information corresponding to a current network standard for the current camping cell — S22

in response to the current network standard supporting DL dynamic beamforming, obtaining the first beam feature set and the second beam feature set related to the current network standard — S23

in response to a calculation result between the at least one first parameter of the first beam feature set and the at least one second parameter of the second beam feature set and a threshold information set, obtaining a feature recognition result — S24

inputting the at least one first parameter of the first beam feature set and the at least one second parameter of the second beam feature set into a preset neural network model for beam sensing, and obtaining a feature recognition result output by the preset neural network model for beam sensing — S25

in response to the at least one first parameter of the first beam feature set and the at least one second parameter of the second beam feature set satisfying a preset condition, selecting the first beam feature set or the second beam feature set as an acquisition source of CSI — S26

FIG. 6

start

obtaining the network standard information
corresponding to the current camping cell

Is the
network standard
information a first network
standard ?

yes · no

determinig the terminal is
located in a radio resource
control connected state

Is the
network standard
information a second
network
standard ?

yes

no

Does a
dedicated configuration
signaling indicate that the
terminal is in a preset
transmission
mode?

no

yes

Is
frequency
range information a
frequency
range 1

no · yes

Is the
network standard
information a
second network
standard ?

no

Is first
scene information
preset scene
information?

no

yes

Is a
communication
mode, time division
duplex?

no

yes

determining whether
DL dynamic
beamforming is
supported by a third
network standard,
according to a way of
determining support
information
corresponding to a
third network standard

determining DL
dynamic beamforming
supported by the first
network standard

Is second
scene information
preset scene
information?

no

yes

determining DL
dynamic beamforming
supported by the second
network standard

determining that the current network standard does not support DL dynamic beamforming

FIG. 7

input layer    hidden layer 1    hidden layer 2    hidden layer M    output layer

FIG. 8a

FIG. 8b

input data

decision-making tree 1

decision-making tree 2

decision-making tree 3

classification A    classification A    classification B

majority vote

final classification result: A

FIG. 8c

root node
$[k_{0,1}, T_{0,1}]$

internal nodes at the 1st layer
$[k_{1,1}, T_{1,1}]$, $[k_{1,2}, T_{1,2}]$

internal nodes at the 2nd layer
$[k_{2,1}, T_{2,1}]$, $[k_{2,2}, T_{2,2}]$
$[k_{2,2}, T_{2,2}]$, $[k_{2,2}, T_{2,2}]$

internal nodes at the $Q^{th}$ layer
$[k_{Q,1}, T_{Q,1}]$, $[k_{Q,2}, T_{Q,2}]$, $\cdots$, $[k_{Q,2^Q}, T_{Q,2^Q}]$

leaf nodes, no parameter, only used as a decision

A    B    A    B    A    B

FIG. 8d

preset observation period    preset observation period    preset observation period

first time information

current period    second time information

FIG. 9

period sliding direction

observation sliding period

first time information

a time point of
obtaining a next
feature recognition
result

second time information

current period

FIG. 10

1100

apparatus for beam sensing

1101

set obtaining unit

1102

source determination unit

FIG. 11

1200

1201
computing unit

1202
ROM

1203
RAM

1204

1205
I/O interface

1206
input unit

1207
output unit

1208
storage unit

1209
communication unit

FIG. 12

1303

1301

memory ⟺ processor

1302

interface

FIG. 13

Europäisches
Patentamt

European
Patent Office

Office européen
des brevets

# EUROPEAN SEARCH REPORT

**Application Number**

EP 25 15 3871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/201151 A1 (QUALCOMM INC [US]) 19 October 2023 (2023-10-19) | 1-5,7,8, 10-15 | INV. H04B7/06 |
| Y | * figure 3 * * paragraph [0137] - paragraph [0138] * * paragraph [0127] * * paragraph [0098] * * paragraph [0100] * * paragraph [0055] * * paragraph [0074] * ----- | 6,9 | |
| Y | WO 2023/207526 A1 (ZTE CORP [CN]) 2 November 2023 (2023-11-02) * the whole document * | 6,9 | |
| X,P | & EP 4 485 273 A1 (ZTE CORP [CN]) 1 January 2025 (2025-01-01) * paragraph [0045] * * paragraph [0038] * ----- | 6,9 | |

**TECHNICAL FIELDS
SEARCHED (IPC)**

H04B

The present search report has been drawn up for all claims

| Place of search | Date of completion of the search | Examiner |
|---|---|---|
| The Hague | 20 May 2025 | Iavarone, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 3871

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | | Publication date | Patent family member(s) | | Publication date |
|---|---|---|---|---|---|
| WO 2023201151 | A1 | 19-10-2023 | CN | 119013912 A | 22-11-2024 |
| | | | EP | 4508764 A1 | 19-02-2025 |
| | | | US | 2025158680 A1 | 15-05-2025 |
| | | | WO | 2023201151 A1 | 19-10-2023 |
| WO 2023207526 | A1 | 02-11-2023 | CN | 117035018 A | 10-11-2023 |
| | | | EP | 4485273 A1 | 01-01-2025 |
| | | | KR | 20250003505 A | 07-01-2025 |
| | | | WO | 2023207526 A1 | 02-11-2023 |

EPO FORM P0459

For more details about this annex : see Official Journal of the European Patent Office, No. 12/82